(19) **Europäisches Patentamt / European Patent Office / Office européen des brevets**

(11) **EP 1 996 928 B1**

(12) **EUROPÄISCHE PATENTSCHRIFT**

(45) Veröffentlichungstag und Bekanntmachung des Hinweises auf die Patenterteilung:
**27.06.2018   Patentblatt 2018/26**

(21) Anmeldenummer: **07723157.9**

(22) Anmeldetag: **09.03.2007**

(51) Int Cl.:
**G01N 27/90** (2006.01)

(86) Internationale Anmeldenummer:
**PCT/EP2007/002102**

(87) Internationale Veröffentlichungsnummer:
**WO 2007/104497 (20.09.2007 Gazette 2007/38)**

(54) **ANORDNUNG UND VERFAHREN ZUR ZERSTÖRUNGSFREIEN PRÜFUNG VON LANGGESTRECKTEN KÖRPERN SOWIE DEREN SCHWEISS- UND BONDVERBINDUNGEN**

SYSTEM AND METHOD FOR THE NONDESTRUCTIVE TESTING OF ELONGATE BODIES AND THEIR WELDBOND JOINTS

DISPOSITIF ET PROCÉDÉ POUR CONTRÔLER SANS DESTRUCTION DES CORPS ALLONGÉS ET LEURS LIAISONS SOUDÉES ET MÉTALLISÉES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **10.03.2006   DE 102006011281**
**07.04.2006   DE 102006016537**

(43) Veröffentlichungstag der Anmeldung:
**03.12.2008   Patentblatt 2008/49**

(73) Patentinhaber:
• **Bruker EAS GmbH**
  **63450 Hanau (DE)**
• **Bundesanstalt für Materialforschung und -prüfung**
  **(BAM)**
  **12205 Berlin (DE)**
• **Institut für Photonische Technologien e.V.**
  **07745 Jena (DE)**

(72) Erfinder:
• **VON KREUTZBRUCK, Marc**
  **14169 Berlin (DE)**
• **EIDMANN, Gunnar**
  **63791 Karlstein (DE)**
• **ALLWEINS, Kai**
  **36277 Schenklengsfeld (DE)**
• **MATTHEIS, Roland**
  **07743 Jena (DE)**

(74) Vertreter: **Zimmermann & Partner**
**Patentanwälte mbB**
**Postfach 330 920**
**80069 München (DE)**

(56) Entgegenhaltungen:
EP-A2- 1 267 161     US-A1- 2005 007 108
US-B1- 6 504 363     US-B1- 6 822 443

• ALLWEINS K ET AL: "Defect detection in aluminum laser welds using an anisotropic magnetoresistive sensor array" JOURNAL OF APPLIED PHYSICS, AMERICAN INSTITUTE OF PHYSICS. NEW YORK, US, Bd. 97, Nr. 10, 17. Mai 2005 (2005-05-17), Seiten 10Q102-10Q102, XP012070091 ISSN: 0021-8979
• WINCHESKI BUZZ ET AL: "DEEP-FLAW DETECTION WITH GIANT MAGNETORESISTIVE (GMR) BASED SELF-NULLING PROBE" REVIEW OF PROGRESS IN QUANTITATIVE NONDESTRUCTIVE EVALUATION, XX, XX, Bd. 509, 2000, Seiten 465-472, XP009083857 in der Anmeldung erwähnt
• SMITH C H ET AL: "GMR MAGNETIC SENSOR ARRAYS FOR NDE EDDY-CURRENT TESTING" REVIEW OF PROGRESS IN QUANTITATIVE NONDESTRUCTIVE EVALUATION, XX, XX, Bd. 657, 2003, Seiten 419-426, XP009083858 in der Anmeldung erwähnt

• **MUCK M ET AL: "Non-destructive testing of niobium sheets for superconducting resonators using an LTS SQUID system" PHYSICA C, NORTH-HOLLAND PUBLISHING, AMSTERDAM, NL, Bd. 368, Nr. 1-4, 1. März 2002 (2002-03-01), Seiten 96-99, XP004336188 ISSN: 0921-4534 in der Anmeldung erwähnt**

**Beschreibung**

Die Erfindung betrifft eine Anordnung und ein Verfahren zur Prüfung von langgestreckten Körpern sowie deren Schweiß- und Bondverbindungen, die elektrisch leitend oder teilweise elektrisch leitend sind.

Im Bereich der zerstörungsfreien Werkstoffprüfung haben sich aufgrund gestiegener Qualitätsanforderungen (zum Beispiel ISO 9000 ff.) eine Reihe von neuen Prüfmethoden entwickelt und etabliert. Dennoch existieren eine Reihe von Problemstellungen in der Qualitätssicherung, die nur bedingt physikalisch/technisch oder nur mit hohem Kostenaufwand realisierbar sind. Dies betrifft beispielsweise die Detektion von Mikrodefekten in Aluminium-Schweißnähten sowie die Detektion von Defekten bei der Herstellung von Aluminium-Bonddrähten.

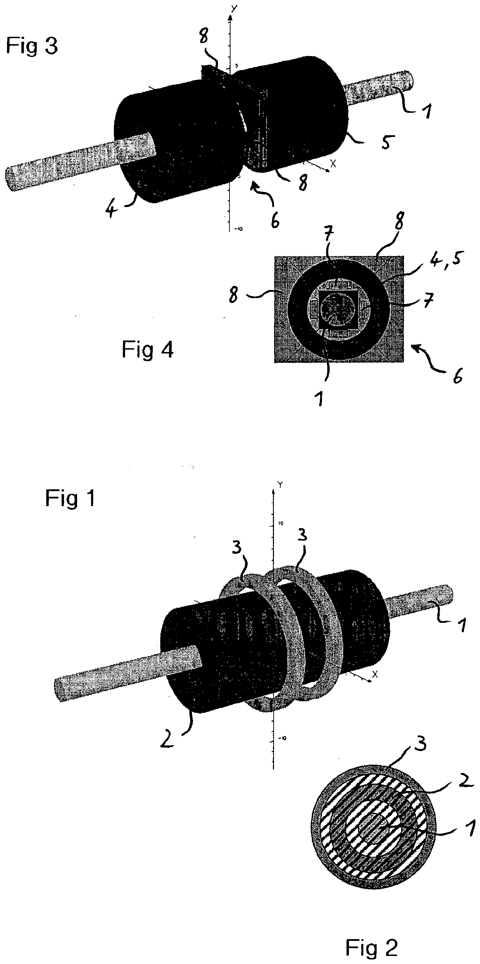

Fig. 1 zeigt eine konventionelle Wirbelstromprüfanordnung. Ein zu prüfender Draht 1 verläuft koaxial zur Längsachse einer langgestreckten Anregungsspule 2. Um die Anregungsspule 2 herum sind koaxial zwei Detektionsspulen 3 angeordnet. Ein Querschnitt der in Fig.1 gezeigten Anordnung ist in Fig. 2 dargestellt. Die Anregungsspule 2 erzeugt in dem Draht 1 ein Magnetfeld, das zu einem Wirbelstrom in dem Draht 1 führt.

Der von der Anregungsspule 2 hervorgerufene Wirbelstrom erzeugt selbst ein Magnetfeld in dem Draht 1, das in den Detektionsspulen 3 einen Strom induziert. Der Induktionsstrom wird als Maß für den im Draht erzeugten Wirbelstrom gemessen und ausgewertet.

Nachteilig ist, dass die Ringfläche jeder Detektionsspule 3 mindestens so groß sein muss wie die Querschnittsfläche der Anregungsspule 2. Die Ringfläche der Detektionsspule ist daher groß im Vergleich zur Querschnittsfläche des Drahtes 1. Mit der Ringfläche nimmt die Ortsauflösung der Detektionsspule ab. Die große Ringfläche der Detektionsspulen 3 geht also mit einer geringen Ortsauflösung einher. Defektsignaturen des detektierten Stroms von Defekten unterhalb der Oberfläche des Drahtes ähneln in diesem Fall häufig denen von Oberflächenfehlern. Die in den Figuren 1 und 2 gezeigte Anordnung liefert wenig aussagekräftige Prüfungsergebnisse für den Draht 1.

Die Feldempfindlichkeit der Detektionsspulen 3 ist gering gegenüber den zu messenden Magnetfeldänderungen, die von üblichen Defekten im Draht verursacht werden. Für ein auswertbares Messsignal der Detektionsspulen 3 ist daher ein hohes Anregungsmagnetfeld notwendig. Nachteilig ist, dass ein hohes magnetisches Magnetfeld nur mit Anregungsspulen großer Ausdehnung erzielt werden kann, was die Ortsauflösung der Detektionsspulen reduziert (siehe Ausführungen letzter Absatz). Das hohe Magnetfeld zur Anregung kann dem geringen zu detektierenden Magnetfeld des Wirbelstroms überlagert sein. Das Anregungsmagnetfeld ist dann ein "Störfeld" gegenüber dem zu messenden Magnetfeld. Dieses Feld reduziert die Empfindlichkeit der Detektionsspulen 3.

Zur Lokalisierung und zur Bestimmung der Größe eines Einschlusses im Draht wird bislang beispielsweise eine Rückrechenmethode basierend auf den Phasen- und Amplituden-Informationen des demodulierten Messsignals verwendet. Alternativ wird auch Magnetosensorik zur hochempfindlichen Messung von Magnetfeldern verwendet. Gegenüber der in den Figuren 1 und 2 gezeigten herkömmlichen Prüfanordnung erlaubt Magnetosensorik eine zuverlässigere Detektion von 100 $\mu$m großen Defekten in elektrisch leitfähigen Prüfteilen für Anregungsfrequenzen von bis zu 40 kHz [M. Muck, F. Gruhl, C. Welzel, M. von Kreutzbruck, Physica C 368, 96-99 (2002)].

Ansätze werden verfolgt, magnetoresistive (MR) Sensoren in der zerstörungsfreien Materialprüfung einzusetzen [W. Ricken, J. Liu, W. J. Becker, EMSA 2000, Dresdner Beiträge zur Sensorik 13, 71-72 {2000}], [C. H. Smith, R. W. Schneider, T. Dogaru, S. T. Smith, Rev. Prog. in QNDE, 22, 419-426, (2003)], [B. Wincheski, M. Namkung, Rev. Prog. Quant. Nondestr. Eval. 509, 465 (2000)]. AMR-Sensoren (Anisotropic Magneto Resistance) sowie GMR-Sensoren (Giant Magneto Resistance) eignen sich für viele Applikationen der zerstörungsfreien Materialprüfung aufgrund einer hohen Ortsauflösung bei hoher Feldempfindlichkeit. Fordert man eine Ortsauflösung von 100 $\mu$m, so können mit MR-Sensoren Feldempfindlichkeiten von deutlich besser als 1 nT/√Hz realisiert werden. Aus dem Pool der restlichen Magnetosensoren bieten nur noch SQUID-Sensoren (Superconducting Quantum Interference Device) bei gleicher Ortsauflösung eine höhere Feldempfindlichkeit, die jedoch nur mit hohem apparativen und finanziellen Aufwand realisierbar ist.

Aufgabe der Erfindung ist es, die zerstörungsfreie Detektion von Störungen in langgestreckten Körpern sowie Schweiß- und Bondverbindungen ohne wesentliche Erhöhung des Aufwandes zu verbessern.

Die Aufgabe wird durch eine Anordnung gemäß Anspruch 1 und durch ein Verfahren gemäß Anspruch 8 gelöst.

Es ist eine Mess- und Prüfanordnung vorgesehen, bei der ein Strom zur Prüfung von Drähten und Mikro-Kontakten in den Drähten bzw. Mikro-Kontakten erzeugt wird. Dabei wird davon ausgegangen, dass Störungen in den Drähten bzw. Mikro-Kontakten eine im Vergleich zum Draht bzw. Mikro-Kontakt veränderte Leitfähigkeit aufweisen. Der in dem zu prüfenden Körper erzeugte Strom umfließt daher die zu detektierende Störung oder fließt verstärkt durch sie hindurch im Vergleich zum die Störung umgebenden Körper. Das mit dem Stromfluss im zu prüfenden Körper einhergehende Magnetfeld wird von mindestens einem Magnetfeldsensor abgenommen. Der Magnetfeldsensor hat in etwa die Größe der zu untersuchenden Störung(en) oder ist sogar kleiner als diese. Eine Einrichtung kann benutzt werden, die ein den zu prüfenden Körper durchdringendes Magnetfeld erzeugt. Das Magnetfeld erzeugt in dem zu prüfenden Körper Wirbelströme, deren Magnetfelder dann ebenfalls von mindestens einem Magnetfeldsensor abgenommen werden.

Die Magnetfeldssensoren weisen magnetoresistive (MR) Sensorelemente auf, die in etwa die Größe der zu untersuchenden Störung haben oder kleiner sind als diese. Die Ortsauflösung der hochempfindlichen magnetoresistiven Sensorelementen liegt ungefähr in der Größenordnung der Abmessungen der zu untersuchenden Störung(en).

Als zu prüfende Mikro-Kontakte kommen beispielsweise Schweiß- oder Bondverbindungen in Frage. Der zu prüfende Körper umfasst elektrisch leitende bzw. elektrisch teilweise leitende Materialien. Das Material kann als Reinstoff, Legierung oder Verbundwerkstoff, mit oder ohne Isolation vorliegen. Der zu prüfende Körper kann ferner ein Supraleiter sein oder einem Wirbelstromprüfverfahren zugängliche Halbzeuge für die Herstellung von Supraleitern umfassen. Der zu prüfende Körper kann einen keramischen Hochtemperatursupraleiter oder einen metallischen Supraleiter umfassen. Es ist auch möglich, dass der zu prüfende Körper eine Kombination aus einem metallischen und keramischen Supraleiter aufweist.

Eine hochgenaue Bestimmung der Position und Größe von Störungen kann mit Magnetfeldsensoren erzielt werden, die sich hinsichtlich des Querschnittsmittelpunktes des langgestreckten Körpers gegenüber liegen. Verhältnisse von Größen werden ausgewertet, die aus Amplituden von Magnetfeldern von sich gegenüberliegenden Magnetfeldsensoren gebildet werden. Die Positionsbestimmung und Bestimmung der Größe einer Störung kann bereits mit Signalen, die von der Störung ausgelöst werden, von zwei Magnetfeldsensoren erfolgen.

Bei einer ringartigen Anordnung von vier Sensoren um den zu prüfenden Körper mit gleichen Abständen zwischen den Sensoren am Umfang des Körpers können die Messwerte der Signale jeweils zweier Sensoren in ein Verhältnis gesetzt werden. Sechs Signalverhältnisse können gebildet werden. Zwei der Signalverhältnisse werden von den Magnetfeldamplituden sich gegenüberliegender Magnetfeldsensoren gebildet. Die vier weiteren Signalverhältnisse werden aus den Magnetfeldamplituden von Sensoren gebildet, die auf dem Umfang des zu prüfenden Körpers benachbart sind. Bei vier ringartig um einen langgestreckten Körper angeordneten Magnetfeldsensoren erhält man mit sechs Signalverhältnissen ein überbestimmtes System für die Bestimmung der Position und Größe der zu untersuchenden Störung. Daher kann eine Ortung und Größenbestimmung der Störung auch erfolgen, wenn ein oder mehrere der vier Magnetfeldsensoren kein ausreichendes Signal zur Messung einer Störung liefert/liefern. Anhand des Signals von nur einem der vier Magnetfeldsensoren kann die Position und Größe einer Störung nur abgeschätzt werden.

Als magnetoresistive Sensoren können AMR (Anisotropic Magneto Resistance) oder GMR (Giant Magneto Resistance) -Sensoren verwendet werden. Ein Array aus einer Vielzahl von XMR (AMR, GMR)-Sensoren ist ebenfalls möglich. Beispielsweise kann ein AMR-Array aus 64 Einzelsensoren verwendet werden, wobei jeder Einzelsensor einen Permalloy-Streifen aufweist. Die Feldempfindlichkeit jedes Einzelsensors kann ungefähr 1 nT/$\sqrt{Hz}$ betragen. Jeder Einzelsensor des Arrays aus 64 Sensoren kann eine Größe von $50 \cdot 20$ $\mu m^2$ und einen Abstand 350 $\mu m$ zu seinen benachbarten Sensoren aufweisen. Bei einem Abstand zwischen jedem Einzelsensor und dem zu prüfenden Körper von 100 $\mu m$ +/-10 $\mu m$ beträgt die örtliche Auflösung 100 $\mu m$ +/- 10 $\mu m$.

Alternativ zu einem AMR-Sensor-Array mit einer Gesamtlänge von beispielsweise 26,8 mm können GMR-Sensoren um den zu prüfenden Körper ringartig in der Querschnittsebene des Körpers angeordnet sein.

Die Erfindung wird nachfolgend anhand der in den Figuren dargestellten Beispielen näher erläutert. In den Figuren bezeichnen, sofern nicht anders angegeben, gleiche Bezugszeichen gleiche Bauteile mit gleicher Bedeutung.

Figur 1        ist eine schematische Ansicht einer herkömmlichen Wirbelstromprüfanordnung mit einer Anregungsspule und zwei Detektionsspulen;

Figur 2        zeigt im Querschnitt die Wirbelstromprüfanordnung nach Figur 1;

Figur 3        ist eine schematische Ansicht einer Prüfungsanordnung mit zwei Anregungsspulen und vier Magnetfeldsensoren;

Figur 4        zeigt im Querschnitt die Prüfungsanordnung nach Figur 3;

Figur 5        ist eine schematische Darstellung des Messaufbaus einer Anordnung zur Wirbelstromprüfung;

Figur 6        ist eine schematische Darstellung einer Anordnung von vier Magnetfeldsensoren um einen Draht herum;

Figur 7        ist eine schematische Darstellung eines Magnetfeldsensors in Form eines Gradiometer-Chips;

Figur 8        ist eine mikroskopische Aufnahme zweier Widerstandsstreifen am oberen Ende des Gradiometer-Chips nach Figur 7;

Figur 9        ist eine mikroskopische Aufnahme zweier Widerstandsstreifen an der unteren Chipkante des Gradiometer-Chips nach Figur 7;

Figur 10   zeigt in der Draufsicht das Platinenlayout des Gradiometer-Chips nach Figur 7 für eine WheatstoneBrücken-Schaltung;

Figur 11   zeigt das Ersatzschaltbild für das Platinenlayout nach Figur 10;

Figur 12   zeigt einen GMR-Schichtstapel im Querschnitt;

Figur 13   zeigt in einer Grafik die Feldempfindlichkeit des Schichtstapels aus Figur 12 mit 2,5 nm dicker Kupferschicht;

Figur 14   zeigt in einer Grafik ein Messsignal einer Multidefektstruktur und einer Referenzkerbe in einem Draht;

Figur 15   zeigt eine Visualisierung der Messdaten aus Figur 14 in einem Helligkeitsmuster,

Figur 16   zeigt die Messdaten aus Figur 14 nach einer Signalverarbeitung;

Figur 17   zeigt in einer Grafik Messdaten eines Einschlusses in einem Draht;

Figur 18   zeigt in einer Grafik Messdaten eines Signals, das nicht von einer Störung herrührt, in den Messdaten nach Figur 17;

Figur 19   zeigt in einer Grafik Messdaten eines Signals, das nicht von einer Störung herrührt, in den Messdaten nach Figur 16;

Figur 20   zeigt schematisch den Querschnitt eines eine Störung aufweisenden Drahtes und vier ringförmig dazu angeordnete Magnetfeldsensoren;

Figur 21   zeigt in einer Grafik ein von einer Störung herrührendes Messsignal, am Magnetfeldsensor direkt oberhalb der Störung;

Figur 22   zeigt in einer Grafik ein von einer Störung herrührendes Messsignaleines gegenüber der Störung um 90° abgewinkelten Magnetfeldsensors;

Figur 23   zeigt in einer Grafik ein von einer Störung herrührendes Messsignaleines zweiten gegenüber der Störung um 90° abgewinkelten Magnetfeldsensors;

Figur 24   zeigt in einer Grafik ein von einer Störung herrührendes Messsignaleines der Störung gegenüberliegenden Magnetfeldsensors;

Figur 25   zeigt schematisch einen Querschnitt eines Drahtes mit Poren, wobei um den Draht vier Magnetfeldsensoren angeordnet sind;

Figur 26   zeigt in einer Grafik mittels FEM berechnete Signalstärken für Poren an verschiedenen Positionen im Draht nach Figur 25 sowie Messdaten eines Einschlusses im Draht nach Figur 25;

Figur 27   ist eine Visualisierung von Phaseninformationen in einem Helligkeitsmuster zu einer gemessenen Luftpore in einem Draht;

Figur 28   zeigt anhand eines Diagramms die Phaseninformationen aus Figur 27 in y-Richtung ausgehend von vier Positionen in x-Richtung;

Figur 29   zeigt eine Visualisierung eines Phasenbandes in einem Helligkeitsmuster zu von einer Störung herrührenden Messdaten eines am oberen Ende eines Drahtes positionierten Magnetfeldsensors;

Figur 30   zeigt eine Visualisierung eines Phasenbandes in einem Helligkeitsmuster zu von einer Störung herrührenden Messdaten eines seitlich eines Drahtes positionierten Magnetfeldsensors,

Figur 31   zeigt eine Visualisierung eines Phasenbandes in einem Helligkeitsmuster zu von einer Störung herrührenden Messdaten eines am unteren Ende eines Drahtes positionierten Magnetfeldsensors,

Figur 32 ist eine Darstellung eines Querschnittes eines Drahtes mit überlagerten Phasenbändern, die in den Figuren 29 bis 31 gezeigt sind, und die einen Schnittpunkt als Position der Störung bilden;

Figur 33 ist eine Querschnittsdarstellung eines Drahtes mit geschwungenen Linien, die basierend auf Amplitudenverhältnissen sich gegenüberliegender Magnetfeldsensoren in einem Draht in einer FEM-Simulation berechnet sind und die einen Schnittpunkt als Position der Störung bilden,

Figur 34 zeigt in einer Grafik Messdaten eines Signalhubes aufgrund eines Einschlusses in einem Draht in Abhängigkeit von der Winkelposition des messenden Sensors gegenüber dem Einschluss;

Figur 35 ist eine grafische Darstellung von simulierten Defektsignaturen in Abhängigkeit des Winkels zwischen einem Magnetfeldsensor und einer Störung für verschiedene Positionen der Störung;

Figur 36 zeigt schematisch einen Querschnitt eines Drahtes, wobei in dem Draht Störungen angeordnet sind, von denen Messwerte herrühren, die in Figur 35 gezeigt sind,

Figur 37 zeigt in einer Grafik die simulierten Defektsignaturen nach Figur 35 mit normalisierten Signalstärken;

Figur 38 zeigt den Drahtquerschnitt und eine Prüfungsanordnung mit vier Magnetfeldsensoren zur Positionsbestimmung einer Störung im Draht;

Figur 39 zeigt schematisch eine Fläche in einem Drahtquerschnitt, in der sich eine Störung befindet, wobei die Fläche unter anderem mit Hilfe von nicht von der Störung herrührenden Messwerten eines Sensors der in Figur 38 gezeigten Prüfungsanordnung berechnet wird;

Figur 40 ist ein Flussdiagramm für verschiedene Möglichkeiten der Bestimmung der Defektposition und Defektgröße bei fehlender Sensorinformation,

Figur 41 zeigt bezogen auf den Drahtquerschnitt Messdaten zurückgerechneter Positionen einer Störung für unterschiedliche Winkellagen der Störung gegenüber den Sensoren einer Prüfungsanordnung mit vier Sensoren;

Figur 42 zeigt in einer Grafik den Radius einer Störung berechnet aus den Positionen der in Figur 41 gezeigten Störung für drei Magnetfeldsensoren;

Figur 43 zeigt räumlich eine Stromverteilung, die mittels FEM in einem supraleitenden Draht mit Abrisszone und dickem Kern berechnet wird;

Figur 44 ist eine grafische Darstellung der Signalstärke von Magnetfeldern des Abrisses und des dicken Kerns in dem supraleitenden Draht aus Figur 43;

Figur 45 ist eine grafische Darstellung von Signallängen von Defektsignalen für vier unterschiedliche Drähte als Funktion der Winkellage des Defektes zum Sensor und

Figur 46 ist eine grafische Darstellung von Signallängen der Defektsignale von vier um einen Draht ringförmig angeordneten Magnetfeldsensoren als Funktion der Defektlänge für eine Winkellage des Defektes von 0°.

Eine Anordnung zur Wirbelstromprüfung eines Drahtes 1 ist in Figur 3 gezeigt. Der Draht kann einen Durchmesser von größer oder gleich 10 $\mu$m aufweisen. Vorzugsweise beträgt der Durchmesser des Drahtes zwischen 0,5 und 2 mm. Die zu detektierenden Störungen in dem Draht 1 betragen vorzugsweise 5 bis 10 % des Durchmessers des Drahtes 1. Im Folgenden wird alternativ zu dem Begriff Störung der Begriff Defekt verwendet. Unter einem Defekt wird ein Körper begrenzter räumlicher Ausdehnung verstanden, der sich im zu untersuchenden Körper befindet. Ein Defekt kann eine Verformung oder ein Fremdkörper im zu untersuchenden Körper sein. Eine Kombination aus einer Verformung und einem Körper als Defekt ist ebenfalls möglich. Eine Verformung lediglich der Außenseite des zu untersuchenden Körpers, die die Funktionalität des Körpers unverändert lässt, ist kein Defekt. Beispielsweise sind Riefen auf einer äußeren Isolierschicht eines Drahtes keine defekte, wenn sie die Funktion der Isolierschicht nicht beeinträchtigen.

Im Draht 1 als zu prüfender Körper wird ein Wirbelstrom mittels Anregungsspulen 4, 5 erzeugt.

Der zu prüfende Körper muss elektrisch leitende bzw. teilweise elektrisch leitende Materialien umfassen. Diese können als Reinstoff, Legierung oder als Verbundwerkstoff mit oder ohne Isolation vorliegen. Auch Supraleiter und einem Stromprüfverfahren zugängliche Halbzeuge für die Herstellung von Supraleitern sind zur Prüfung geeignet. Für die Prüfung kommen insbesondere keramische Hochtemperatursupraleiter oder metallische Supraleiter in Betracht. Auch eine Kombination aus einem keramischen Supraleiter und einem metallischen Supraleiter ist möglich.

Bei der in Figur 3 gezeigten Anordnung sind zwei Ringspulen als Anregungsspulen 4, 5 vorgesehen. Der Prüfungsaufbau, der auch Prüfmittel genannt wird, umfasst die Anregungsspulen und das Detektionsarray 6. Die Ringspulen definieren jeweils eine Ebene, wobei der Draht 1 senkrecht zu den Ebenen der Spulen entlang der Längsachse der Spulen verläuft. Der zu prüfende Körper verläuft senkrecht zu den Ebenen der vier Ringspulen durch die Mittelpunkte der Spulen hindurch. Der Draht 1 bewegt sich relativ zu dem Prüfmittel. Die Relativgeschwindigkeit zwischen zu prüfendem Körper und Prüfmittel kann bis zu 100 m/s betragen.

Die Anregungsspulen können als "gradiometrische Anregungsspulen" ausgeführt sein. Bei einer gradiometrischen Anordnung der Ringspulen 4, 5 wird das Anregungsmagnetfeld am Ort des Detektionsarrays 6 weitestgehend kompensiert. Beispielsweise wird von gradiometrischen Anregungsspulen ein Magnetfeld von +/- 0,5 mT im Draht 1 erzeugt. Die Ringspulen 4, 5 können einen Abstand von wenigen Millimetern zueinander haben.

Alternativ zu Ringspulen können auch Doppel-D-Spulen als Anregungsspulen 4, 5 verwendet werden. Bei Verwendung von Doppel-D-Spulen kann das Detektionsarray 6 beispielsweise ein AMR-Sensor-Array umfassen. Das AMR-Sensor-Array kann parallel zwischen den beiden Hälften der Anregungsspule positioniert sein. Am Ort des AMR-Sensor-Arrays zwischen den Kreishälften des Doppel-Ds ist das magnetische Anregungsfeld um einen Faktor von ca. 200 gegenüber dem Maximalfeld der Doppel-D-Spule verringert. Die Anordnung aus Doppel-D-Spulen und parallel zu diesen Spulen angeordnetem AMR-Sensor-Array 6 eignet sich insbesondere zur Messung von Mikro-Defekten. Zur Messung bei Schweiß- und Bondverindungen wird beispielsweise ein AMR-Sensor-Array mit einer Gesamtlänge von 26,8 mm verwendet. Jeder der 64 Einzelsensoren des AMR-Arrays weist eine Größe von 50-20 $\mu$m$^2$ und einen Abstand von 375 $\mu$m zu seinen benachbarten Sensoren auf. Jeder Einzelsensor umfasst einen Permalloy-Streifen und hat eine Feldempfindlichkeit von ungefähr 1 nT/$\sqrt{Hz}$ auf.

Das Detektionsarray 6 kann auch vier zusammengesetzten Segmenten 8 umfassen. Jedes Segment 8 umfasst einen Magnetfeldsensor 7. Am Ort der Magnetfeldsensoren 7 ist das Anregungsmagnetfeld um etwa den Faktor 3 gegenüber dem Maximalfeld innerhalb der Spulen 4, 5 reduziert. Die Positioniergenauigkeit jedes Magnetfeldsensors 7 in Bezug auf den langgestreckten Draht 1 beträgt beispielsweise kleiner oder gleich dem Betrag von +/-10 $\mu$m. Eine hohe Positioniergenauigkeit kann mit einem Manipulator (nicht gezeigt) erreicht werden. Ein Manipulatur ist eine in einer oder mehreren Achsen verfahrbare Einheit. Die verfahrbare Einheit umfasst mindestens einen elektrischen oder hydraulischen Motor. Der Motor wird ausserhalb der Verfahreinheit gesteuert. An dem Manipulator kann jeweils ein Magnetfeldsensor 7 angebracht sein. Bei hoher Genauigkeit der Positionierung des Magnetfeldsensors 7 gegenüber dem Draht 1 kann es vorkommen, dass der Magnetfeldsensor 7 gegenüber seiner gewünschten Position von dem Draht 1 beabstandet ist. Ein seitlicher Versatz jedes Magnetfeldsensors zur Symmetrieachse des Drahtes 1 ist möglich. Ungenauigkeiten in der Positionierung des Magnetfeldsensors gegenüber dem zu prüfenden Körper können insbesondere durch Verbiegungen des zu prüfenden Körpers und/oder durch Schwingungen des Körpers erzeugt werden. Mit der in Figur 3 gezeigten Prüfanordnung ist es möglich, dass die Magnetfeldsensoren 7 bezüglich ihren gewünschten Positionen jeweils mit einer Genauigkeit von kleiner oder gleich 10 $\mu$m angeordnet sind.

In Figur 4 ist das in Figur 3 gezeigte Detektionsarray 6 im Querschnitt gezeigt. Jeder Magnetfeldsensor 7 weist eine örtliche Auflösung zwischen 60 und 120 $\mu$m auf. Die vier Magnetfeldsensoren 7 sind ringförmig mit gleichen Abständen voneinander am Umfang des Drahtes 1 in einem Abstand von 100 $\mu$m +/-10 $\mu$m vom Draht 1 angeordnet. Die vier Sensoren bilden eine Ebene, die senkrecht zur Drahtrichtung verläuft. Jeweils zwei Magnetfeldsensoren liegen sich hinsichtlich des Mittelpunktes des Drahtes gegenüber. Der Draht 1 verläuft senkrecht zu einer von dem Ring aus Magnetfeldsensoren gebildeten Ebene durch den Mittelpunkt des Rings. Der Draht 1 ist zu der Längsachse der Anregungsspulen 4, 5 koaxial angeordnet.

Es werden vorliegend beispielsweise AMR-Sensoren 7 mit einer Magnetfeldempfindlichkeit von ungefähr 1 nT/$\sqrt{Hz}$ verwendet. Mit diesen Sensoren ist es möglich, zuverlässig Störungen im zu prüfenden Körper 1 oder dessen Schweiß- und Bondverbindung mit einer Größe zwischen beispielsweise 100 $\mu$m und 750 $\mu$m zu lokalisieren.

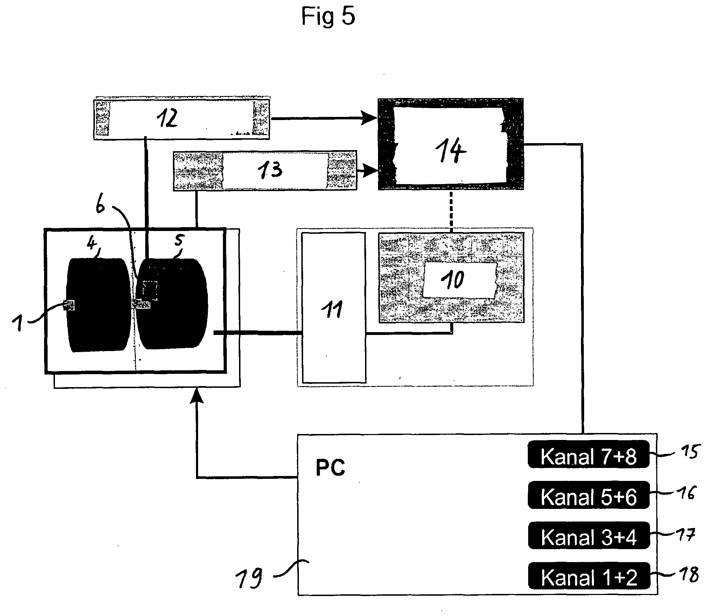

Figur 5 zeigt den Aufbau einer Prüfungsanordnung für eine Wirbelstromprüfung. Ein Funktionsgenerator 10 erzeugt einen zur Anregung benötigten sinusförmigen Wechselstrom. Der Wechselstrom wird in einer Endstufe 11 verstärkt und speist die Anregungsspulen 4, 5.

Von den Anregungsspulen erzeugte Magnetfelder induzieren im Draht 1 Wirbelströme. Das Detektionsarray 6 nimmt die von den Wirbelströmen im Draht 1 erzeugten Magnetfelder ab.

Eine Ausleseeinheit 12 leitet die Magnetfeldsignale des Detektions-Arrays 6 an einen Mehrkanal-Lockin-Verstärker 14 weiter. Mittels eines Kompensationssignals 13, das vom Funktionsgenerator stammt, demoduliert der Lockin-Verstärker die von Störungen und Defekten verursachten Magnetfeldsignale. Mit dem Mehrkanal-Lockin-Verstärker 14 ist es möglich, simultan mehrere Einzelsensoren des Detektions-Arrays 6 auszulesen.

Zur simultanen Auslese von mehreren Einzelsensoren eines Detektionsarrays 6 wird beispielsweise ein Mehrkanal-Lockin-Verstärker mit 16 Kanälen verwendet. Für Wirbelstrom-Messungen an Schweißnähten können beispielsweise acht Sensoren eines Linien-Arrays ausgelesen werden, die einen mittleren Teil des Linien-Arrays bilden. Zusätzlich werden weitere acht Sensoren ausgelesen. Diese Sensoren sind mit wachsendem Abstand zu einem benachbarten Sensor links und rechts von den Sensoren des mittleren Teils des Linien-Arrays auf der gesamten Breite des Linien-Arrays angeordnet. Dies ermöglicht, eine Schweißnaht sowie deren nähere Umgebung mit einem einzelnen Linienscan zu erfassen. Die für die verwendeten Blechdicken optimalen Anregungsfrequenzen werden vor der Messung mittels einer Finite-Elemente-Simulation (FEM) ermittelt. Für ein 1 mm dickes Aluminium-Blech ergibt sich beispielsweise eine geeignete Anregungsfrequenz von 20 kHz.

Acht Kanäle für den Mehrkanal-Lockin-Verstärker 14 werden bevorzugt benutzt, um bei Verwendung von vier Magnetfeldsensoren jeweils zwei Kanäle eines Magnetfeldsensors auszulesen. Die simultane Erfassung von mehr als vier Sensoren, beispielsweise 8, 16 oder 24 Sensoren, ist mit dem Lockin-Verstärker 14 bei einer entsprechenden Anzahl verfügbarer Messkanäle ebenfalls möglich. Mit der Zahl von unterschiedlichen Signalen, die eine Störung erzeugt, nimmt die Ortsauflösung für die zu untersuchende Störung zu. Der Lockin-Verstärker 14 stellt neben Amplituden- auch Phaseninformationen bzw. Real- und Imaginärteile der abgenommenen Magnetfelder zur Verfügung.

GMR-Sensoren können höhere Feldempfindlichkeiten als AMR-Sensoren erzielen. Die erzielbaren Feldempfindlichkeiten eines GMR-Sensors können Werte bis zu 200 pT/√Hz aufweisen. Wie AMR-Arrays können auch GMR-Sensoren zu Arrays zusammengesetzt werden. Die messbaren Magnetfelder von GMR-Arrays liegen beispielsweise zwischen 1 $\mu$T bis zu 10 $\mu$T. Mit dem in Figur 3 bis 5. gezeigten Messaufbau können hohe Wiederholgenauigkeiten im Vergleich von Messdaten zu unterschiedlichen Messungen, die von einer Störung erzeugt werden, erzielt werden. Bei einem Vergleich zwischen den Daten aus Einzelmessungen und den gemittelten Messdaten liegt die relative Messabweichung zwischen 3 bis 5 %. Das Signal-zu-Rausch-Verhältnis (SNR) beträgt für das abgenommene Magnetfeld von Störungen in einem langgestreckten Körper beispielsweise zwischen 7 und 2000. Die Signalstärke des durch die Störungen verursachten Magnetfeldes beträgt hierbei zwischen 10 und 30 nT.

Die Ausgangssignale des Lockin-Verstärkers 14 werden in einer Auswerteeinheit 19 ausgewertet. Als Sensor kommt beispielsweise ein GMR-Sensor in Frage. Neben den Amplituden verarbeitet die Auswerteeinheit 19 die Phasenlage des Ausgangssignals bezüglich der Referenzanregung. Auswertbar ist zudem der Abstand zwischen einem Minimum und Maximum eines Ausgangssignales, der als Signallänge bezeichnet wird. Die Phasenlage, Amplitude, Signallänge und die Anzahl der Spitzenwerte der Messwerte des Lockin-Verstärkers 14 sind Charakteristika für eine Störung im zu prüfenden Körper. Mit der Auswerteeinheit 19 können charakteristische Merkmale einer Störung erkannt, von den restlichen Messdaten isoliert und ausgelesen, also extrahierbar erfasst werden. In einem langgestreckten Körper mit Filamentstruktur zählt eine Abschätzung der minimalen und maximalen Anzahl geschädigter Filamente zu den charakteristischen Merkmalen. Die Abweichung des Minimal- und Maximalwertes beträgt unter guten Messbedingungen nicht mehr als 50 % vom wahren Wert. Gute Messbedingungen liegen vor, wenn der zu untersuchende Körper praktisch vibrationsfrei mit einer Sensorpositioniergenauigkeit von ungefähr +/- 50 $\mu$m gemessen wird. Mit dem Rückrechenalgorithmus der Auswerteeinheit 19 ist es möglich eine Ortsauflösung bei einer maximalen Durchlaufgeschwindigkeit des zu untersuchenden Körpers durch die Prüfanordnung von 5 m/s von 0,5 mm in Längsrichtung des zu untersuchenden Körpers zu erzielen. Bei einem Durchmesser des zu untersuchenden Körpers von 1 mm beträgt die Ortsauflösung in der Querschnittsebene des zu untersuchenden Körpers etwa +/-50 $\mu$m. Die Ortsauflösung skaliert linear mit dem jeweiligen Durchmesser des zu untersuchenden langgestreckten Körpers beispielsweise in einem Durchmesserbereich von 0,4 bis 6 mm. Mit der Auswerteeinheit 19 ist eine Entscheidung über einen Maschinenstopp bei laufender Messung bei maximaler Durchlaufgeschwindigkeit von 5 m/s in weniger als 30 ms möglich. Innerhalb dieser Zeitspanne übermittelt von dem in Figur 5 gezeigten Messaufbau ein Signal an die Steuerung der Maschine, mit der der zu untersuchende Körper geprüft und ggf. produziert wird.

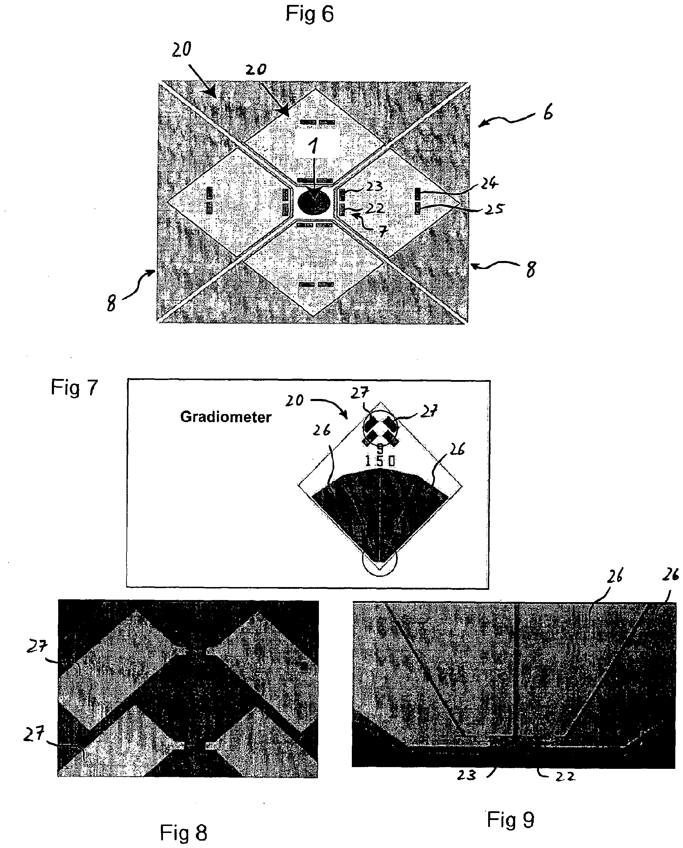

Figur 6 zeigt schematisch eine Anordnung von vier Magnetfeldsensoren um einen Draht. Das Detektionsarray 6 besteht aus vier Sensorsegmenten 8. Jedes Sensorsegment 8 weist einen Chip 20 mit vier GMR-Sensoren 22, 23, 24, 25 auf. Der Chip 20 befindet sich auf einem Platinenausschnitt 21. Die Sensorsegmente 8 weisen jeweils eine Form auf, die in Richtung des zu untersuchenden Drahtes 1 spitz zulaufend ausgeführt ist. Die GMR-Sensoren 22 bis 25 auf einem Sensorsegment 8 werden für den Aufbau einer Wheatstone-Brücken-Schaltung verwendet. Jedes Sensorsegment 8 stellt einen ortsauflösenden Magnetfeldsensor dar. Mit der in Figur 6 gezeigten Anordnung aus vier um einen Draht ringförmig angeordneten Magnetfeldsensoren ist es möglich, Störungen in dem Draht mit einer Genauigkeit von beispielsweise 5 bis 10 % des Durchmessers des Drahtes zu positionieren.

Eine schematische Darstellung eines Magnetfeldsensors in Form eines Gradiometer-Chips 20 ist in Figur 7 gezeigt. Auf dem Chip 20 sind vier Aluminium-Bondflächen 26 mäanderförmig, eng aneinanderliegend und gegenseitig elektrisch isoliert aufgebracht. Am oberen Ende des Chips 20 befinden sich Aluminium-Bondflächen 27. Die Chipfläche beträgt ca. 4,3-4,3 mm$^2$.

Figur 8 zeigt eine mikroskopische Aufnahme von zwei Widerstandsstreifen 24, 25 am oberen Ende des Gradiometer-Chips 20. Die Widerstandsstreifen 24, 25 haben jeweils eine Länge von 150 $\mu$m und eine Breite von 9 $\mu$m.

Figur 9 zeigt eine mikroskopische Aufnahmevon zwei Widerstandsstreifen 22, 23 an der unteren Chipkante des Gradiometer-Chips 20. Die Ecke des Chips in Figur 9 ist ca. 30 $\mu$m vor den Widerstandsstreifen 22, 23 entfernt.

Die Widerstandsstreifen 22, 23 sind GMR-Sensoren, von denen Magnetfeldsignale mit hoher örtlicher Auflösung abgenommen werden. Bei einer Größe der Störungen im zu prüfenden Körper oder dessen Schweiß- und Bondverbindung zwischen 100 $\mu$m und 750 $\mu$m weisen die Magnetfeldsensoren in etwa die Größe der zu untersuchenden Störungen auf oder sind kleiner als diese.

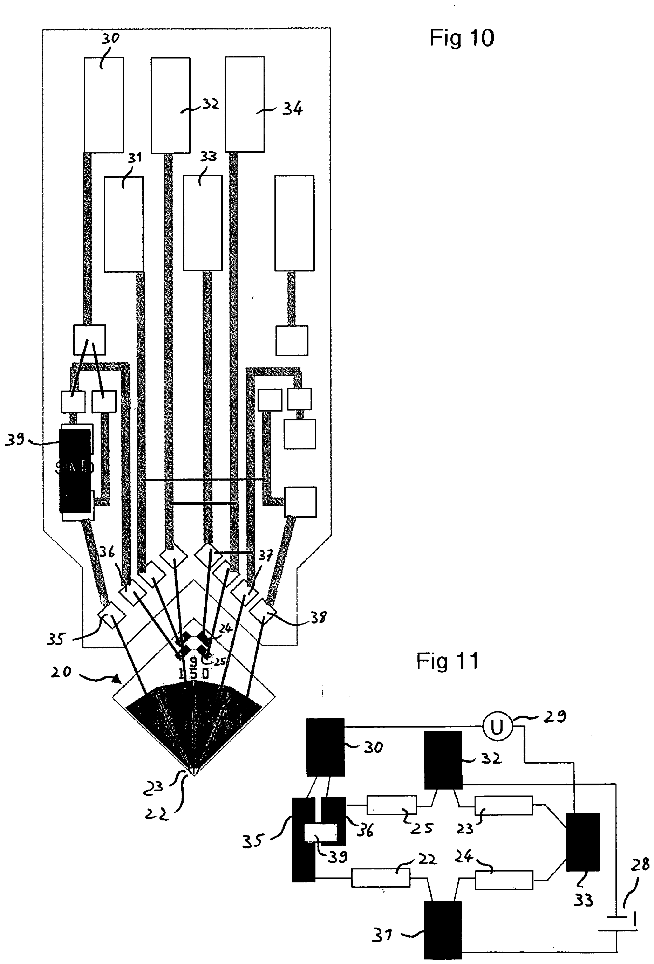

In Figur 10 ist schematisch ein Platinenlayout des Gradiometer-Chips 20 mit einer Wheatstone-Brücken-Schaltung dargestellt. Zur Unterdrückung des störenden Einflusses temperaturbedingter Fluktuationen auf die abgenommenen Magnetfelder und zur Unterdrückung von Magnetfeldvariationen mit einer Reichweite, die deutlich größer ist als die Größe des Chips 20, werden jeweils vier Widerstandsstreifen 22 bis 25 in einer Wheatstone-Brücken-Schaltung zusammengefasst. Die vier Widerstandsstreifen bilden einen gemeinsamen Magnetfeldsensor. Der Chip 20 ist auf einen Keramikträger gebondet, wobei Bonddrähte die Aluminium-Bondflächen 26 mit Kontaktflächen 35 bis 38 verbinden. Die Bonddrähte sind beispielsweise in Epoxidharz eingegossen. Die Kontaktflächen 35 bis 38 werden über Leiterbahnen mit weiteren Kontaktflächen 30 bis 34 verbunden.

Ein Ersatzschaltbild des in Figur 10 gezeigten Platinenlayouts ist in Figur 11 dargestellt. Die GMR-Widerstandsstreifen 22 bis 25 bilden eine Wheatstone-Brücken-Schaltung. An den Kontaktflächen 30, 33 wird die Wheatstone-Brücke mit einer Spannung 29 versorgt. Signalabgriffe der Brücke sind die Kontakte 31, 32. Der Abgleich der Brücke wird über einen Widerstand 39 vorgenommen. Der Wert des Widerstandes 39 beträgt beispielsweise 47 - 56 Q. Der Widerstand 39 kann als SMD (Surface Mounted Device)-Widerstand ausgeführt sein. Die Einbindung des Ausgleichswiderstandes 30 erfolgt in dem entsprechenden Halbbrückenzweig über einen Bonddraht. Eine Justage des Abgleichwiderstandes 39 kann erfolgen, indem entweder am oberen Ende des Widerstandes 39 oder am unteren Ende des Widerstandes 39 abgegriffen wird.

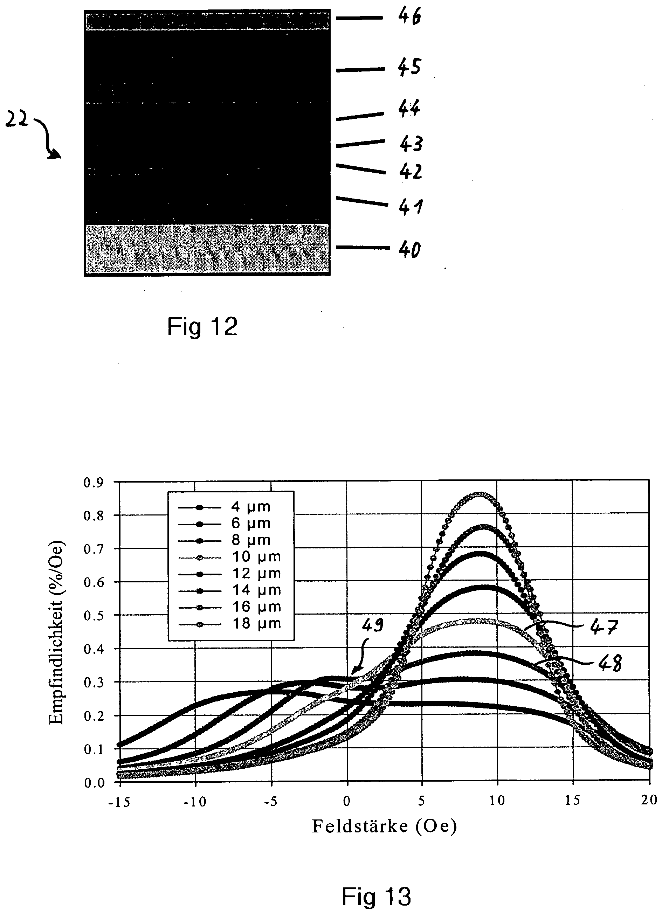

Figur 12 zeigt schematisch den Aufbau eines GMR-Schichtstapels als Querschnitt des GMR-Widerstandsstreifens 22. Der Schichtstapel 22 umfasst eine 5 nm breite Tantal-Schicht 40 als Wachstumsschicht. Es folgen aufeinander als funktionale Schichten eine 5 nm breite Permalloy (Nickel-Eisen)-Schicht 41, auf die eine 1 nm breite Kobalt-Eisen-Schicht 42 als Sensorschicht aufgebracht ist. Weiterhin ist eine 2,2 nm bzw. 3,5 nm breite Kupferschicht als Zwischenschicht 43 aufgebracht. Darüber befindet sich eine 3 nm breite Kobalt-Eisen-Schicht 44, auf der eine 7 nm breite Iridium-Mangan-Schicht 45 als Referenzschicht aufgebracht ist. Der Schichtstapel 22 wird von einer 2 nm breiten Ruthenium-Schicht 46 als Deckschicht zum Schutz des Stapels abgeschlossen.

Figur 13 zeigt in einer Abbildung die Feldempfindlichkeit des Schichtstapels 22 als Grafenschar bei einer Dicke der Kupferschicht 43 von 2,5 mm. Die Grafenschar besteht aus acht Grafen, wobei jeder Graf eine unterschiedliche Streifenbreite des Schichtstapels 22 repräsentiert. Die Empfindlichkeit ist die Widerstandsänderung in Prozent im Verhältnis einer Magnetfeldstärke in Oersted. Die größte Empfindlichkeit bei einem nicht vorhandenen äußeren Feld ergibt sich für einen 600 $\mu$m langen Steg zu 0,4 %/Oe (49) bei einer Stegbreite von 8 $\mu$m (48) und 10 $\mu$m (47).

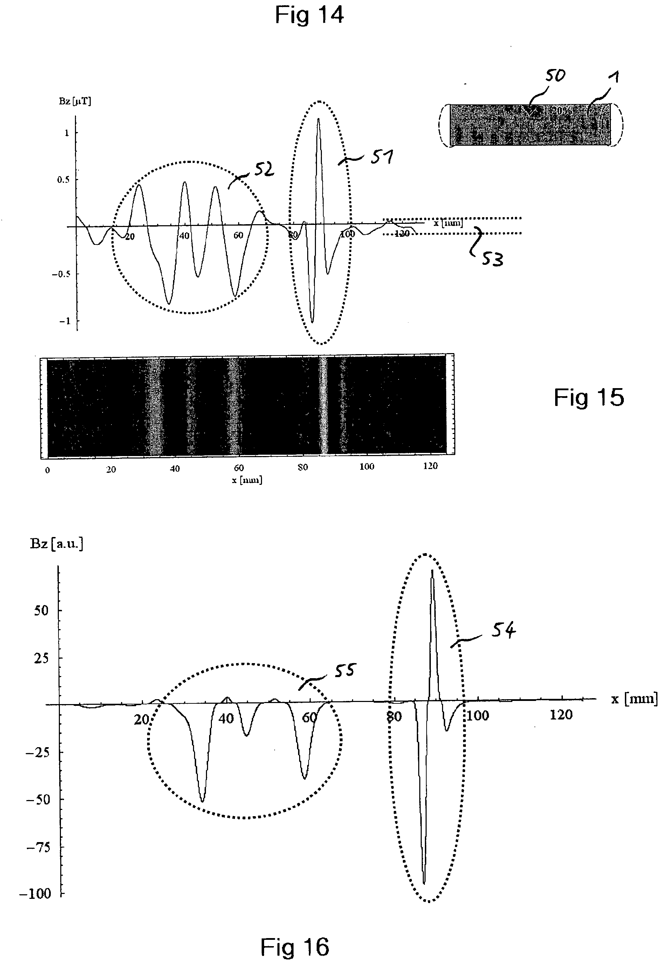

Figur 14 zeigt ein Messsignal einer Multidefektstruktur 52 in einem Draht 1 im Vergleich zu dem Messsignal 51 einer Referenzkerbe 50. Die Referenzkerbe 50 weist eine Tiefe von 20 % des Durchmessers des Drahtes 1 gemessen von der Drahtoberfläche in Richtung der Drahtachse auf. Der Durchmesser des Drahtes 1 beträgt bei den Messungen in Figur 14 1,3 mm. Die Anregungsfrequenz ist 10 kHz. Die Messdaten zu den abgenommenen Magnetfeldern stammen von vier GMR-Sensoren, die ringartig um den Draht in einer Querschnittsebene des Drahtes angeordnet sind. Neben den eindeutigen Signalen der Referenzkerbe 51 und der Multidefektstruktur 52 ist in Figur 14 ein Rauschbereich 53 erkennbar. Bereits mit den Rohdaten 52 kann die Störung im Draht 1 deutlich detektiert werden. Eine Visualisierung mit einem Helligkeitsmuster der Messdaten 51, 52 ist in Figur 15 gezeigt.

Eine weitere Verbesserung des Signal-Rausch-Verhältnisses lässt sich durch eine geeignete Signalverarbeitung erzielen. Die Messdaten aus Figur 14 nach einer Signalverarbeitung sind in Figur 16 dargestellt. Im Vergleich zu dem Rauschen 53 der Messdaten in Figur 14 ist das Rauschen bei den Messdaten 54, 55 in Figur 16 deutlich reduziert. Die Signalverarbeitung umfasst beispielsweise die folgenden Schritte:

- Kompensation der Bewegung des Drahtes 1 senkrecht zur Längsachse des Drahtes 1. Die Kompensation erfolgt über eine Subtraktion einer linearen Funktion von den Messdaten zu den abgenommenen Magnetfeldern. Durch die Subtraktion der linearen Funktion werden die Messdaten auf Null gesetzt.

- Einstellen der Phasenlage im abgenommenen Magnetfeld über eine Phasenrotation, bis das abgenommene Magnetfeld der Störung eine möglichst große Amplitude in einem Kanal gegenüber einem Kompensationssignal aufweist. Es werden Amplituden- und Phasendaten genutzt, die von dem Lockin-Verstärker 14 aufgezeichnet werden.

- Kompensation der Mitbewegung des langgestreckten Drahtes 1 in Richtung der Achse des Drahtes 1 über eine Quadrierung des abgenommenen Magnetfeldes oder einer aus dem abgenommenen Magnetfeld gebildeten Größe.

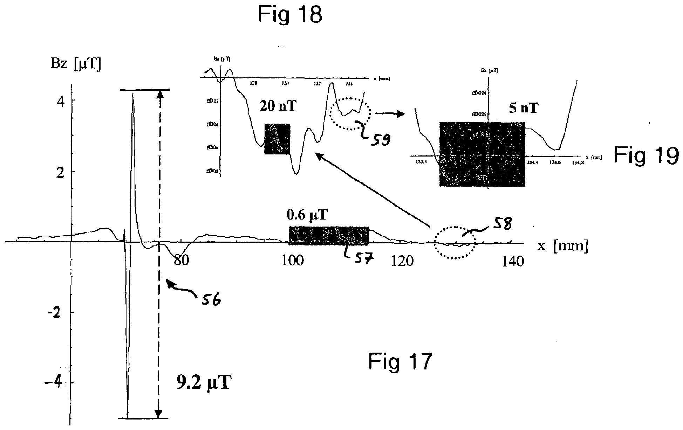

Figur 17 zeigt eine Messung eines Einschlusses mit einem Durchmesser von 1,3 mm in einem Draht. Die Anregungsfrequenz beträgt 10 kHz. Die gemessene Defektsignatur hat einen Signalhub, d.h. einen Abstand zwischen Maximum und Minimum von 9,2 $\mu$T (56). Neben dem Nutzsignal aufgrund einer Störung im Draht beinhaltet die Messung in Figur 17 auch Artefakte von etwa 0,6 $\mu$T (57) und 20 nT (58). Ein Artefakt ist ein Messsignal, das nicht von einer zu untersuchenden Störung herrührt. Der Artefakt von 0,6 $\mu$T (57) ist bedingt durch Abweichungen des Drahtes von einer geraden Form. Dieser Artefakt tritt bei aufgewickelten und anschließend begradigten Drähten auf. Im industriellen Einsatz hat der Artefakt 57 keinen Einfluss.

Der Artefakt von etwa 20 nT (58) ist grafisch in Figur 18 dargestellt. Dieser Artefakt rührt von geringen Abweichungen der Oberflächentopologie des Drahtes von einer idealen Drahtoberfläche (Riefen etc.) her. Der Artefakt 58 kann zusätzlich durch Vibrationen des Drahtes hervorgerufen werden. Vibrationen entstehen beispielsweise beim Anfahren/Abbremsen der Verfahreinheit, mit der der Draht durch die Prüfanordnung gefahren wird.

Figur 19 zeigt vergrößert einen Bereich 59 aus Figur 18. Ein Artefakt mit einem Signalhub von 5 nT ist erkennbar. Dieser Artefakt ist bedingt durch Systemrauschen, welches durch die verarbeitende Elektronik verursacht wird. Das Rauschen des GMR-Sensors, mit dem die Messdaten der Figuren 17 bis 19 erzeugt werden, liegt unterhalb 1 nT/√Hz.

Setzt man 20 nT als Störsignalstärke für die in Figur 17 gezeigten Messungen an, so ergibt sich ein Signal-zu-Rausch-Verhältnis von 460. Messungen von größeren Defekten als den in Figur 17 gemessenen führen zu einem SNR von über 1000.

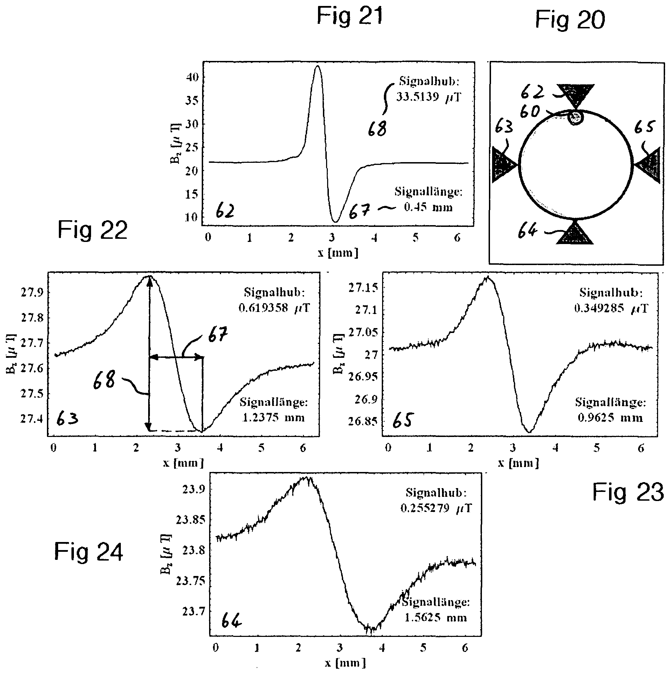

Die Anordnung zur Messung von Störungen ist in Figur 20 schematisch gezeigt. Ringförmig um den Draht und in der Querschnittsebene des Drahtes sind 4 GMR-Sensoren 62 bis 65 angeordnet. Die Arbeitsfrequenz für die Messung beträgt 10 kHz und die Verfahrgeschwindigkeit des Drahtes 1 zur Messanordnung 40 mm/s. Der Drahtdurchmesser des Drahtes 1 beträgt 1,2 mm. Der Abstand der Magnetfeldsensoren zur Drahtoberfläche beträgt zwischen 50 $\mu$m und 100 $\mu$m. Der Defekt 60 läuft unterhalb des Magnetfeldsensors 62 vorbei.

Figur 21 zeigt in einer grafischen Darstellung das Messsignal betreffend die Störung 60, das mit dem Magnetfeldsensor 62 direkt oberhalb der Störung 60 aufgenommen wurde. Der Signalhub 68 beträgt ca. 33 $\mu$T bei einer Signallänge 67 von 0,45 mm. Die Figuren 22 und 23 zeigen die Messsignale der Sensoren 63 und 65. Gegenüber der Störung 60 sind die Magnetfeldsensoren 63 und 65 um 90° auf der Querschnittsebene des Drahtes gegenüber der Störung geneigt. Figur 24 ist eine grafische Darstellung der Magnetfeldmessung einer Störung 60 mit dem Magnetfeldsensor 64. Der Sensor 64 befindet sich an der hinsichtlich der Position der Störung 60 gegenüberliegenden Seite des Drahtes 1. Erwartungsgemäß liefert der von der Störung 60 am weitesten entfernte Sensor 64 den geringsten Signalhub 68. Der Signalhub des gemessenen Signals des Sensors 64 ist um ca. zwei Größenordnungen geringer als der Signalhub des Messsignals des Sensors 62. Auffallend an den Messdaten von den Magnetfeldsensoren 62 bis 65 ist, dass die Signallänge 67 mit zunehmendem Abstand zum Defekt 60 zunimmt.

Defekte mit kurzer Ausdehnung in Richtung der Drahtachse weisen bei gegebenen Winkel in einer Querschnittsebene des Drahtes zwischen Magnetfeldsensor und Defekt kürzere Signalbreiten auf als Defekte mit langer Ausdehnung in Drahtrichtung. Defekte mit einer schmalen Ausdehnung senkrecht zur Richtung der Drahtachse weisen einen schnelleren Anstieg der Signallänge 67 mit zunehmenden Winkel in der Querschnittsebene des Drahtes des Magnetfeldsensors zu der Störung auf als Defekte mit breiterer Ausdehnung senkrecht zur Drahtrichtung. Hierauf wird weiter unten noch eingegangen.

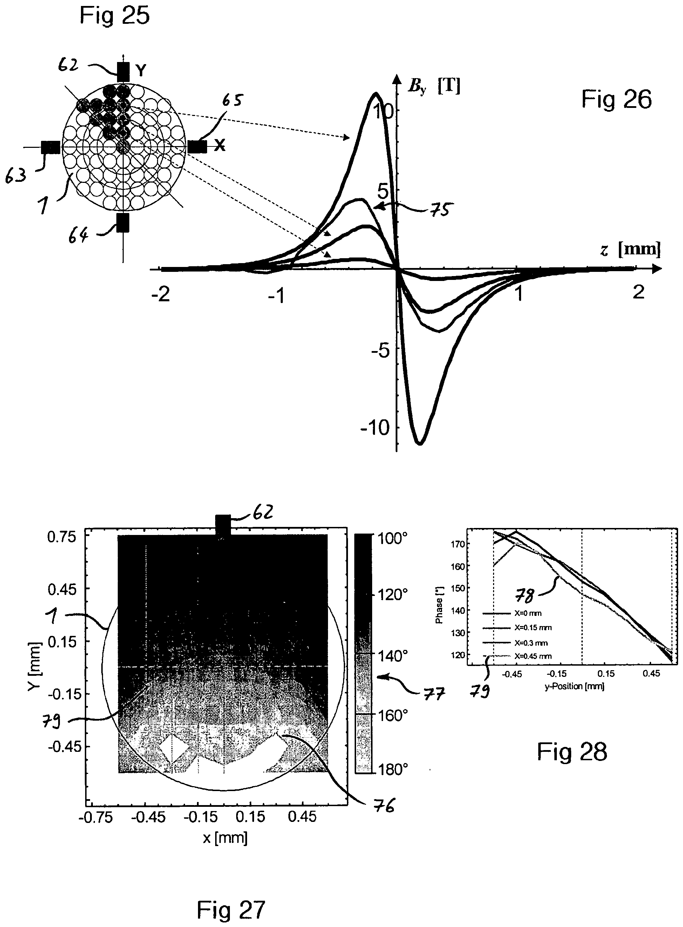

In Figur 25 ist schematisch der Querschnitt eines Drahtes mit 61 Poren dargestellt. Um den Draht 1 herum sind vier Magnetfeldsensoren 62 bis 65 in gleichen Abständen zueinander auf dem Umfang des Drahtes angeordnet. Der Drahtdurchmesser beträgt 1,425 mm. Die Anregungsfrequenz ist 10 kHz. Der Defektradius jeder Pore beträgt 75 $\mu$m. Um Defekte im Inneren eines Drahtes 1 zu positionieren und deren Größe zu bestimmen, wird ein Rückrechenalgorithmus in der Auswerteeinheit 19 verwendet. Der Rückrechenalgorithmus umfasst eine Datenbank. In der Datenbank sind abhängig von den Phasen- und Amplituden-Informationen des demodulierten Messsignals des Lockin-Verstärkers 14 die Position und Größe einer zu untersuchenden Störung abgelegt. Die Daten der Datenbank können aus einer Fusion von Phasen- und Amplituden-Informationen des demodulierten Messsignals der Magnetfeldsensoren bestimmt werden.

Für die Herleitung des Rückrechenalgorithmus werden Drähte 1 mit Referenzdefekten in ein Finite-Elemente-Modell transferiert. Hierzu wird angenommen, das eine Pore jeweils an 61 Positionen innerhalb des ansonsten homogenen Drahtes 1 positioniert ist. Für die Berechnung einer Magnetfeldsignatur einer Störung ist in Figur 25 gezeigt, dass die Störung direkt unterhalb des Sensors 62 angeordnet ist.

In Figur 26 sind die mittels FEM berechneten Amplitudenstärken für jeweils eine Störung im Draht 1 dargestellt. Das mittels FEM berechnete Magnetfeldsignal des Sensors 62 zeigt für die Störung 72 den größten Signalhub. Die Pore 73 ist gegenüber der Pore 72 näher an der Achse des Drahtes 1 positioniert. Für die Pore 73 wird mittels FEM ein Magnetfeldsignal des Sensors 62 bestimmt, das circa den halben Signalhub wie die Störung 72 aufweist. Die Pore 74 ist nahe an der Achse des Drahtes 1 positioniert. Den geringsten Signalhub weist das mittels FEM berechnete Magnetfeldsignal beim Sensor 62 für die Pore 74 auf. Die Messempfindlichkeit des der FEM-Berechnung zu Grunde liegenden GMR-Sensors 62 ist hoch genug, um auch Defekte in der Nähe des Mittelpunktes des Drahtes 1 mit einem ausreichenden SNR-Verhältnis zu bestimmen.

Auffallend ist in den Grafen der Figur 26, dass mit zunehmender Entfernung der Störung vom messenden Magnetfeldsensor die Signallänge 67 des Messsignales zunimmt. Zum Vergleich ist in Figur 26 eine Magnetfeldmessung eines Einschlusses mit einem Defektradius von 65 $\mu$m (75) dargestellt. Signalform, Signalhub und Signallänge des gemessenen Magnetfeldsignals 75 ergeben eine gute Übereinstimmung zu den mittels FEM-Methode berechneten Daten.

In Figur 27 sind Helligkeitswerte 76 von Phaseninformationen zu einer gemessenen Luftpore in einem Draht 1 dargestellt.

Die Phase liegt in einem Bereich zwischen 100° und 180° (77). Die in Figur 27 gezeigten Daten sind über eine FEM-Simulation für eine kugelförmige Luftpore berechnet. Der Durchmesser der Luftpore beträgt 150 $\mu$m. Weiterhin wird bei der FEM-Simulation von einem Drahtdurchmesser von 1,4 mm und einer Anregungsfrequenz von 10 kHz ausgegangen. Die kugelförmige Pore weist als zu messende Störung eine gegenüber dem Draht 1 verschwindende Leitfähigkeit auf.

Auf Grund der geringeren Leitfähigkeit der Pore gegenüber dem Draht 1 wird der in dem Draht 1 erzeugte Wirbelstrom um die Störung herumgeleitet. Die damit einhergehende Änderung des Magnetfeldes des Wirbelstromes wird von dem Sensor 62 als Magnetfeldsignal erfasst. Die zu messende Pore im Draht 1 bewirkt beim Messsignal des Sensors 62 eine Änderung der Phase gegenüber der Referenzanregung von 10 kHz sowie einen Signalhub bei der Amplitude. Die Phasenunterschiede zwischen einem Defekt direkt unterhalb des Sensors 62 und einem Defekt auf der dem Drahtmittelpunkt gegenüberliegenden Seite sind abhängig vom Durchmesser des Drahtes 1 und von der verwendeten Anregungsfrequenz. Beispielsweise führt eine höhere Anregungsfrequenz zu einer schnelleren Phasendrehung. Der durch die Pore erzeugte Phasenunterschied in Figur 27 beträgt 80° vom Minimum (dunkelgrau) zum Maximum (weiß) der Phase auf der Skala 77.

Die Phasenunterschiede sind in Figur 28 für die Phaseninformation aus Figur 27 grafisch dargestellt. Die Richtung vom Sensor 62 zur Drahtachse in der Querschnittsebene des Drahtes 1 definiert die y-Achse der Querschnittsebene. Senkrecht zur y-Achse verläuft die x-Achse. Für vier Positionen in x-Richtung sind die Phasenunterschiede gegenüber der Referenzanregung in y-Richtung in Figur 28 aufgetragen. Mit zunehmender Entfernung vom Sensor 62 nimmt der berechnete Phasenunterschied gegenüber der Referenzanregung kontinuierlich von ca. 120° auf 180° zu.

Aus den mittels FEM berechneten Phasenunterschieden eines Sensors 62 lässt sich die Position des zu messenden Defektes im Draht von einem sogenannten "Phasenband" ableiten. Die Position der zu untersuchenden Störung ist nicht eindeutig festgelegt, da sich die Position der Störung an jeder Stelle des Phasenbandes befinden kann. Das Phasenband in Figur 27 entspricht einer Helligkeitsstufe und wird aus Positionen gleicher Phase in der Querschnittsebene des Drahtes gebildet, in der der Sensor 62 liegt.

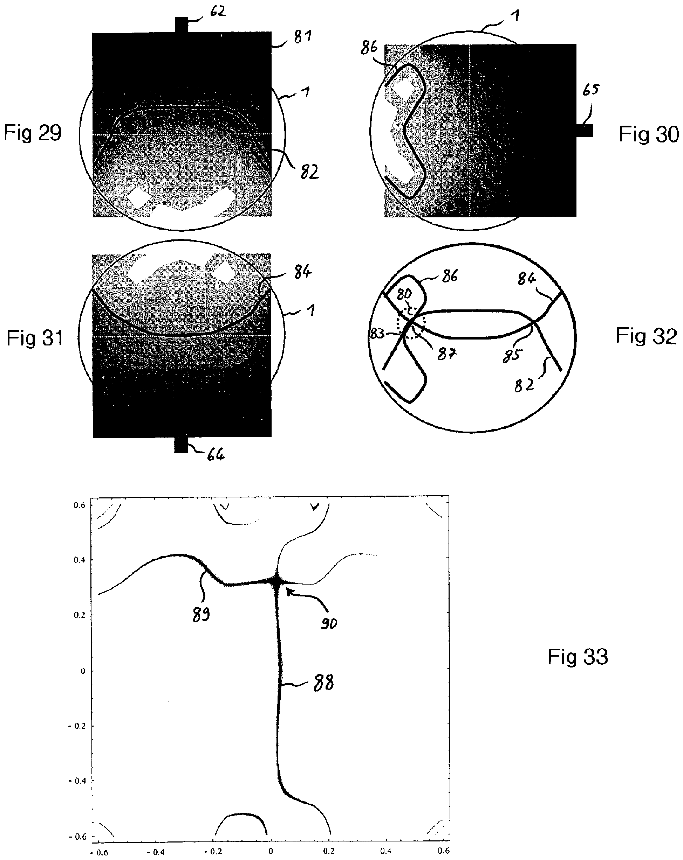

Die Bestimmung der Defektposition über Phaseninformationen mehrerer Magnetfeldsensoren ist in den Figuren 29 bis 32 dargestellt. Ein erstes Phasenband 82 ist in Figur 29 für die Phaseninformation 80 des Magnetfeldsensors 62 als gekrümmte Linie gezeigt. Die Bestimmung der Position der zu untersuchenden Störung erfolgt durch eine Überlagerung unterschiedlicher Phasenbänder von Magnetfeldsensoren, die sich an unterschiedlichen Positionen außerhalb des Drahtes befinden. Ein zweites Phasenband 86 der Phaseninformation 85 eines Sensors 65 befindet sich an der in Figur 30 gezeigten rechten Außenkante des Drahtes. Ein weiteres Phasenband 84 ist in Figur 31 für einen dem Sensor 62 bezüglich des Drahtmittelpunktes gegenüberliegenden Sensor 64 gezeigt.

Figur 32 zeigt im Querschnitt die Überlagerung der Phasenbänder 82, 84 und 86 zur Positionsbestimmung der Störung. Die Position der Störung entspricht dem Schnittpunkt 87 der Phasenbänder 82, 84 und 86. Eine Überlagerung lediglich der Phasenbänder 82 und 86 der Sensoren 62 und 65 ergibt zwei Schnittpunkte 80, 83 in unmittelbarer Umgebung der Position der Störung. Ebenso ergibt eine Überlagerung der Phasenbänder 82 und 84 der Sensoren 62 und 64 zwei Schnittpunkte 85, 87. Die Position der zu untersuchenden Störung ist mittels einer Überlagerung von Phasenbändern mindestens dreier beabstandeter Magnetfeldsensoren eindeutig bestimmt. Bei einer ringförmigen Anordnung von vier Magnetfeldsensoren um einen Draht mit gleichen Abständen der Sensoren voneinander am Umfang des Drahtes ist eine Lokalisierung eines Defektes mit einer Genauigkeit von beispielsweise 5 bis 10% des Drahtdurchmessers möglich.

Die Bildung des Schnittpunktes 87 der Phasenbänder 82, 84 und 86 setzt eine Ausrichtung der Phasenlage der Phasenbänder zueinander und gegenüber dem Draht 1 voraus. Die Ausrichtung jedes Phasenbandes 82, 84 und 86 zu den jeweils anderen Phasenbändern 82, 84, 86 und zum zu untersuchenden Körper, beispielsweise einem Draht, erfolgt gemäß den Positionen der Magnetfeldsensoren 62, 64, 65 zueinander und zum zu untersuchenden Körper.

Mit nur den Amplitudendaten von mehreren Sensoren zu einer zu untersuchenden Störung ist eine Positionsbestimmung der Störung ebenfalls möglich. Vorteilhaft ist eine Anordnung der Sensoren 62 bis 65 auf einem Ring mit gleichen Abständen voneinander auf dem Umfang des zu untersuchenden Körpers 1. Ein Schnittpunkt von zwei Linien als Position einer Störung kann hierbei mit den Amplituden von Magnetfeldsensoren, die dem Mittelpunkt des zu untersuchenden Körpers gegenüberliegen, gebildet werden. Das Magnetfeldkomponente $B_z$, die in Richtung vom Mittelpunkt des Drahtquerschnitts zum jeweiligen Sensor, der zum Mittelpunkt des Drahtquerschnitts hin ausgerichtet ist, von einem als punktförmig angenommenen Defekt ist umgekehrt proportional zum Abstand z des Defektes vom Magnetfeldsensor über:

$$B_z(z) \sim \frac{1}{z^2} \, . \qquad\qquad (1)$$

Trotz des mit dem Abstand zum zu messenden Defekt quadratisch abnehmenden Magnetfeldes ist es möglich, mit einem GMR-Sensor einen am gegenüberliegenden Ende eines Drahtes positionierten Defekt zu messen (siehe Figur 24). Ein besseres SNR-Verhältnis erreicht man, wenn abgenommene Magnetfelder von Sensoren ausgewertet werden, die sich hinsichtlich der Achse des zu untersuchenden Körpers gegenüberliegen. Testmessungen zeigen, dass das Amplitudenverhältnis zweier gegenüberliegender Sensoren am besten durch eine Theorie beschrieben wird, die lediglich die Projektion auf die von den beiden Sensoren gebildete Achse berücksichtigt. Sich gegenüberliegende Sensoren registrieren daher lediglich den Magnetfeldanteil in Richtung der Achse, die durch die beiden Sensoren festgelegt wird.

Bildet man das Verhältnis der Amplituden von sich gegenüberliegenden Sensoren, so entsprechen die gebildeten Werte Amplitudenbändern, die senkrecht zu der von den Sensoren gebildeten Achse in der Querschnittsebene des zu untersuchenden Körpers verlaufen. Der Wert für das gebildete Amplitudenverhältnis entspricht einer Position der zu untersuchenden Störung in dem jeweiligen Amplitudenband zu diesem Wert in der Querschnittsebene des zu untersuchenden Körpers.

Zur eindeutigen Positionsbestimmung eines Defektes können vier um den zu untersuchenden Körper angeordnete Sensoren auf einem Ring mit jeweils gleichem Abständen zueinander am Umfang des Körpers angeordnet sind. Die der Längsachse des zu untersuchenden Körpers gegenüberliegenden Sensoren bilden ein Sensorpaar, das gegenüber den zwei weiteren sich gegenüberliegenden Sensoren um einen Winkel von 90° in der Querschnittsebene des zu untersuchenden Körpers versetzt ist. Bildet man die Amplitudenverhältnisse jeweils beider um 90° gegeneinander versetzter Sensorenpaare, entsprechen die gebildeten Werte Amplitudenbänder in der Querschnittsebene des zu untersuchenden Körpers. Diese Amplitudenbänder bilden ein Fadenkreuz in der Querschnittsebene des zu untersuchenden Körpers. Der Schnittpunkt des Fadenkreuzes entspricht der Position der zu untersuchenden Störung.

Die Ortsauflösung nimmt mit der Zahl von sich gegenüberliegenden in gleichem Winkelabstand voneinander beabstandeten Sensorenpaaren zu. So ist es vorteilhaft, anstelle von 4 Sensoren 8, 16 oder 24 Sensoren einzusetzen. Mit mindestens vier Magnetfeldsensoren, die um den zu prüfenden Körper mit gleichen Abständen voneinander am Umfang des Körpers angeordnet sind, ist eine eindeutige Positionsbestimmung einer Störung möglich. Die Amplitudenverhältnisse von jeweils zwei dem Querschnittsmittelpunkt des zu prüfenden Körpers gegenüberliegenden Sensoren können hierbei bestimmt werden. Die Positionsbestimmung einer Störung ist auch möglich, wenn jeweils zwei dem Mittelpunkt des zu untersuchenden Körpers gegenüberliegende Magnetfeldsensoren in Richtung der Längsachse des zu untersuchenden Körpers gegeneinander versetzt sind. Der Versatz zwischen den Sensorpaaren wird in der Auswerteeinheit 19 durch Einbezug der Relativgeschwindigkeit des zu untersuchenden Körpers gegenüber den Sensoren kompensiert. Neben der Bildung der Amplitudenverhältnisse von Signalen sich gegenüberliegender Sensoren ist es möglich, das Verhältnis der Amplituden von auf dem Umfang des zu untersuchenden Körpers benachbarten Sensoren zu bilden.

Figur 33 zeigt einen Querschnitt einer FEM-Simulation von Amplitudenverhältnissen sich gegenüberliegender Magnetfeldsensoren in einem Draht. Der Drahtdurchmesser beträgt 1,04 mm. Die Frequenz des anregenden Magnetfeldes beträgt 10 kHz. Die sich in dem Schnittpunkt 90 schneidenden Amplitudenbänder 88 und 89 entsprechen jeweils einem Wert für ein Amplitudenverhältnis. Für jedes Amplitudenverhältnis zweier sich gegenüberliegender Sensorpaare ist es möglich, aus einem Abgleich der Amplitudenverhältnisse zusammen mit FEM-Simulationen die Position eines Defektes zu bestimmen. Die Position eines Defektes hängt von der Frequenz des Magnetfeldes, der Position und dem Durchmesser der zu untersuchenden Störung ab. Auch wird die Position einer zu untersuchenden Störung von dem Material der Störung beeinflusst. Bei einem gegebenen Amplitudenverhältnis hängt die Position der Störung zudem von dem Durchmesser des langgestreckten Körpers ab, in dem sich die zu untersuchende Störung befindet. Die zur Positionsbestimmung einer Störung herangezogenen FEM-Simulationen werden daher abhängig von dem Durchmesser des langgestreckten Körpers mit der zu untersuchenden Störung, der Anregungsfrequenz, der Position, dem Durchmesser und dem Material der Störung durchgeführt.

Die FEM-Simulation zur Bestimmung der Position einer Störung umfasst einen Rückrechenalgorithmus, der weitere physikalische Effekte der Messung einbezieht. Die von einem eingespeisten Strom oder einem äußeren Magnetfeld erzeugte Stromdichte ist innerhalb des langgestreckten Körpers nicht konstant. Die Stromdichte eines Wirbelstroms nimmt zum Drahtmittelpunkt hin exponentiell ab. Die zum Drahtmittelpunkt hin exponentiell abnehmende Stromdichte der Wirbelströme wird in die FEM-Simulation mit einbezogen.

Reale Defekte sind jedoch nicht punktförmig, sondern besitzen eine davon abweichende Ausdehnung. Damit ist die Wirbelstromdichte innerhalb des Defektes nicht konstant. Die Magnetfeldsensoren registrieren wie gesagt eine Magnetfeldänderung, die von der Änderung des Wirbelströmflusses um einen Defekt herrührt. Diejenigen Bereiche des Defektes erzeugen ein größeres Signal, die von einer höheren Wirbelstromdichte umflossen werden. Dieses sind die außenliegenden Bereiche einer Störung. Bei ausgedehnten Störungen kommt hinzu, dass das gemessene Magnetfeld bei größerem Abstand zwischen Sensor und Störung abnimmt (Formel 1). Der Rückrechenalgorithmus, der bei einer FEM-Simulation ausgeführt wird, bezieht die Ausdehnung der Störung in dem zu untersuchenden Körper mit ein. Eine Ausdehnung der Störung kann dazu führen, dass die über die abgenommenen Magnetfelder bestimmte Position der Störung und die geometrische Position der Störung im zu untersuchenden Körper voneinander abweichen. Diese Abweichung wird im Rückrechenalgorithmus berücksichtigt und somit ausgeglichen.

Auch die Oberfläche des langgestreckten Körpers mit der zu untersuchenden Störung hat einen Einfluss auf den im zu untersuchenden Körper induzierten Wirbelstrom. Befindet sich die zu detektierende Störung nah an der Oberfläche des zu untersuchenden Körpers, kann der Wirbelstrom nicht mehr ungehindert über die Störung hinweg fließen. Dies verändert das von den Magnetfeldsensoren detektierte Signal. Die FEM-Simulation zur Bestimmung der Position einer Störung bezieht die Änderung eines Wirbelstroms aufgrund der Nähe einer Störung zur Oberfläche des zu untersuchenden Körpers mit ein.

Die Stromdichte im zu untersuchenden Körper und die Leitfähigkeit der zu untersuchenden Störung hängt von der Anregungsfrequenz des den zu untersuchenden Körper umgebenden Magnetfeldes ab. Dieser Effekt wird bei den FEM-Simulationen zur Störungslokalisation mit einbezogen. Eine Korrektur der Finite-Elemente-Simulation erfolgt über einen Vergleich von Positionen bekannter Störungen im zu untersuchenden Körper und den Positionen, die mit Hilfe der FEM-Simulation berechnet werden.

Figur 33 zeigt im Querschnitt einen Draht mit geschwungenen Linien, die für ein bestimmtes Amplitudenverhältnis in einer FEM-Simulation berechnet sind. Die Form der Linien unterscheidet sich deutlich vom Fadenkreuz bei einer geometrischen Bestimmung der Störungsposition aus gemessenen Amplitudenverhältnissen. Im Gegensatz zum mathematischen Modell erhält man keine geraden Amplitudenbänder bzw. Amplitudenlinien. Die Amplitudenlinien 88, 89 sind geschwungen. Die Linien 88, 89 ergeben wie die Geraden des mathematischen Modells innerhalb des zu untersuchenden Körpers einen Schnittpunkt 90 als Position der Störung.

Hat man mit jeweils zwei hinsichtlich des Mittelpunktes einer Drahtquerschnittsebene gegenüberliegenden Magnetfeldsensoren Amplitudenverhältnisse bestimmt, so folgt die Position der Störung aus einer FEM-Darstellung der gemessenen Amplitudenverhältnisse als Funktion der Querschnittskoordinaten des Drahtes (Amplitudenmap). Die Amplitudenverhältnisse werden als Amplitudenmap in einer FEM-Simulation berechnet. Die Position der Störung hängt bei gegebenen Amplitudenverhältnissen von dem Drahtdurchmesser und der Anregungsfrequenz des den Draht umgebenden Magnetfeldes ab. Bei einer Vielzahl unterschiedlicher Drahtdurchmesser führt die Berechnung von Amplitudenmaps bei jedem einzelnen Drahtdurchmesser zu einem hohen Aufwand. Der Berechnungsaufwand lässt sich aber verringern, indem nicht für jeden möglichen Drahtdurchmesser eine FEM-Simulation durchgeführt wird. FEM-Simulationen werden zudem nur für bestimmte Anregungsfrequenzen ausgeführt. Zwischen ausgesparten simulierten Drahtdurchmessern und Anregungsfrequenzen wird interpoliert.

Die Interpolation zwischen zwei berechneten Drahtdurchmessern bzw. Anregungsfrequenzen erfolgt über einen nicht linearen Fit mit einem Polynom zweiter Ordnung. Die fehlenden Amplitudenverhältnisse als Funktion der Querschnittskoordinaten des zu untersuchenden Körpers können über das Polynom zweiter Ordnung zwischen vorhandenen Werten für die nächstliegenden Drahtdurchmesser und Anregungsfrequenzen bestimmt werden.

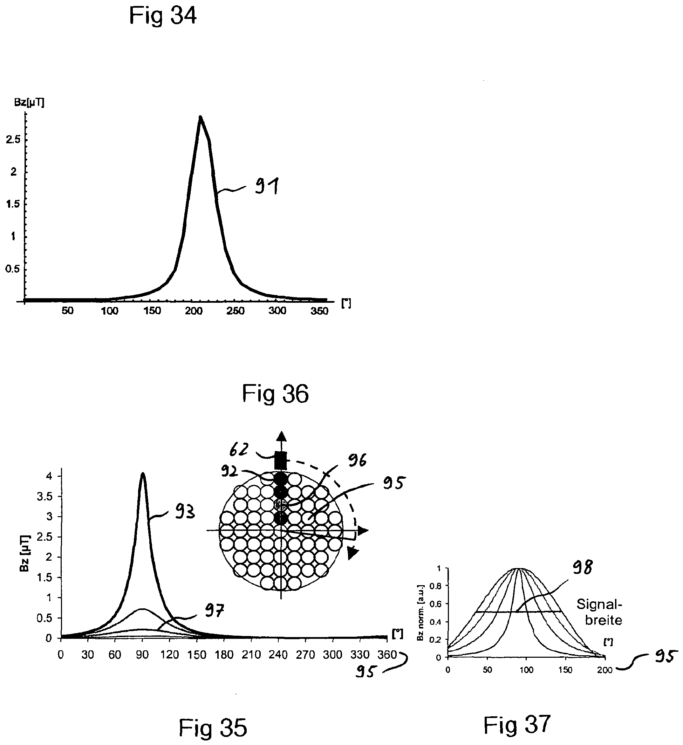

Figur 34 zeigt die Messung eines Signalhubes von einem Einschluss in einem Draht. Die grafische Darstellung der Messdaten erfolgt in Abhängigkeit der Winkelposition des Magnetfeldsensors gegenüber dem Einschluss in der Querschnittsebene des zu untersuchenden Körpers. Die Anregungsfrequenz ist 10 kHz und der Drahtdurchmesser beträgt 1,4 mm. Die Messdaten stammen von einem oberflächennahen Defekt, der bei einer Winkelposition von etwa 210° direkt unter dem Magnetfeldsensor vorbei läuft. Bei einer Winkelposition von 210° wird das maximale Magnetfeldsignal detektiert.

Die Form der Messdaten 91 lässt einen gute Annäherung mit einer Lorenzfunktion zu. Über einen Lorenz-Fit kann die Position des zu messenden Defektes bestimmt werden. Figur 35 zeigt grafisch Daten zur Lorenz-Fit-Simulation für Störungen an unterschiedlichen Positionen im Draht. Diese Positionen lassen sich der schematischen Darstellung eines Drahtquerschnitts in Figur 36 entnehmen. Der Magnetfeldsensor 62 ist direkt oberhalb der Störung 92 an der Oberfläche des Drahtes angeordnet. Unterhalb der Störung 92 sind weitere Störungen 96 mit abnehmenden Abstand von der Drahtachse angeordnet. Die simulierten Messdaten 93 zur Störung 92 sind in Figur 35 in Abhängigkeit vom Winkel 95 des Magnetfeldsensors 62 in der Querschnittsebene des Drahtes gezeigt. Die Lorenz-Fit-Simulation 97 zu der Störung 96 lässt im Vergleich zu den Daten 93 der Störung 92 erkennen, dass mit tieferliegenden Defekten im Draht geringere Signalstärken vom Magnetfeldsensor 62 gemessen werden. Die Lage des Magnetfeldsensors 62 im Drahtquerschnitt, die in Figur 36 gezeigt ist, entspricht einer Winkellage von 90° in Figur 35.

Figur 37 zeigt normalisierte Grafen derjenigen Daten, die in Figur 35 dargestellt sind. Die Signalbreite 98 nimmt mit einem tieferliegenden Defekt zu. Mit der Winkellage des Maximums, der Signalbreite und Signalhöhe des Lorenz-Fits lässt sich die Störung lokalisieren. Die Lorenz-Funktion lautet in allgemeiner Form:

$$B = a \cdot \left( \frac{\omega}{(\rho - \rho_0)^2 + \omega^2} \right), \qquad (2)$$

wobei B das simulierte Magnetfeld, a das maximale Magnetfeld, $\rho_0$ die Winkellage des maximalen Magnetfeldes und $\omega$ die Halbwertsbreite der Lorenz-Funktion ist.

Die Annäherung oder Lorenz-Funktion an die Messdaten kann beispielsweise über acht Stützstellen zwischen einer Winkellage von 40° bis 350° erfolgen (siehe Figur 35). Die Lokalisierung der Störung erfolgt über die Betrachtung der FitParameter $\rho_0$, $2\omega$ und $a/\omega$. Die Lage des Maximums des Magnetfeldes $\rho_0$ zeigt den Winkel zwischen der Störung und dem Magnetfeldsensor in der Querschnittsebene des zu untersuchenden Körpers an. Die Signalbreite $2\omega$ zeigt die Tiefenlage der Störung an. Die Signalhöhe $a/\omega$ erlaubt die Bestimmung der Größe der Störung.

Der Fit mittels Lorenz-Funktion lässt sich dadurch verbessern, dass Messdaten von mehr als vier voneinander beabstandeten Sensoren für die Annäherung der Lorenz-Funktion an die Messdaten herangezogen werden. Eine Positionsbestimmung einer Störung ist über die Anpassung einer Lorenz-Funktion an vorhandene Messdaten möglich. Die Positionsbestimmung einer Störung ist auch durch die Auswertung von Amplituden bzw. aus Amplituden abgeleiteter Größen (siehe Figur 33) oder mit Hilfe von Phaseninformationen (Figur 32) möglich. Daher ist vorgesehen, dass charakteristische Merkmale der Stärke, Form und Phasenlage der Signale von abgenommenen Magnetfeldern unterschiedlicher Magnetfeldsensoren zur Bestimmung der Position und Größe einer Störung verwendet werden. Auch ist es möglich, die Anzahl an Störungen in einem langgestreckten Körper über die Anzahl an Spitzenwerten in den abgenommenen Magnetfeldern der Magnetfeldsensoren zu ermitteln. Der Abstand der Störung von der Oberfläche eines langgestreckten Körpers kann aus der Phasenlage der abgenommenen Magnetfelder bestimmt werden. Die Größe bzw. Abmessung der Störung kann aus der Amplitude oder aus einer von der Amplitude abgeleiteten Größe der abgenommenen Magnetfelder berechnet werden.

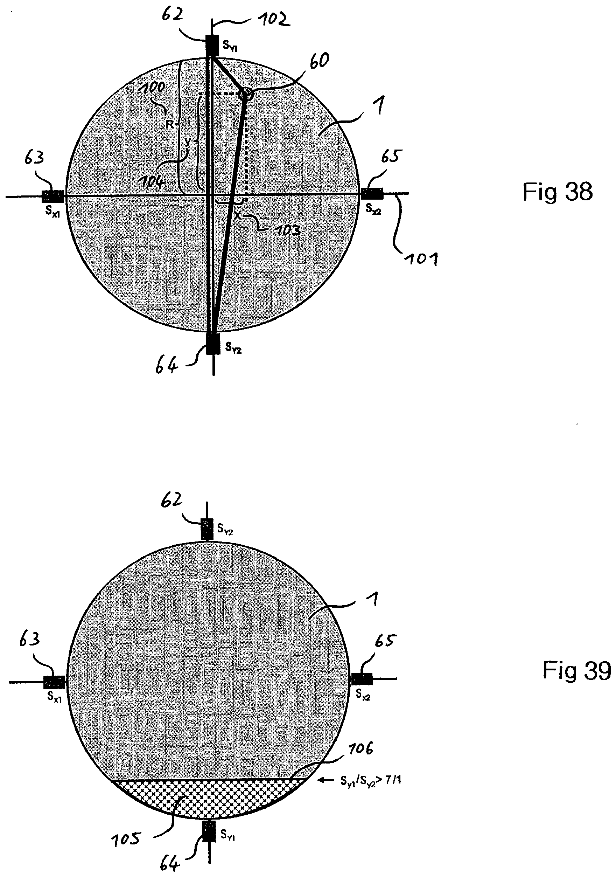

Figur 38 zeigt schematisch im Querschnitt einen Draht 1 mit einer Störung 60 und vier ringförmig um den Draht 1 angeordneten Sensoren 62 bis 65. Die Sensoren 63 und 65 liegen sich bezüglich des Drahtmittelpunktes gegenüber und bilden eine x-Achse 101. Die sich gegenüberliegenden Sensoren 62 und 64 bilden eine zur x-Achse rechtwinklige y-Achse 102. Der Radius 100 des Drahtes 1 ist der Abstand des Mittelpunktes der Querschnittsebene des Drahtes 1 zu jedem der Sensoren 62 bis 65. Auf der x-Achse 101 ist eine Störung 60 von dem Mittelpunkt der Querschnittsebene des Drahtes 1 mit einem Wert von x(103) beabstandet. Auf der y-Achse 102 ist die Störung 60 vom Mittelpunkt der Querschnittsebene des Drahtes 1 um den Wert y(104) beabstandet. Die verwendeten XMR-Sensoren (AMR, GMR) sind lediglich in einer Richtung empfindlich. Die Sensoren 62 bis 65 sind auf den Mittelpunkt des Drahtes 1 hin ausgerichtet. Der Sensor 62 beispielsweise misst nicht die direkte Verbindung zwischen der Störung 60 und dem Sensor 62 als Abstand zur Störung 60. Vielmehr "sieht" der Magnetfeldsensor 62 die Störung 60 lediglich in einem Abstand r(100)-y(104). Der dem Sensor 62 gegenüberliegende Sensor 64 misst lediglich den Abstand r(100)+y(104) als Abstand zur Störung 60. Entsprechend misst der Sensor $S_{x1}$(63) einen Abstand zur Störung 60 von r(100)+x(103) und der Sensor $S_{x2}$ einen Abstand zur Störung 60 von r(100)-x(103). Setzt man die Magnetfeldamplitude $B_{x1}$ des Sensors 63 ins Verhältnis zu der Magnetfeldamplitude $B_{x2}$ des Sensors 65, so gilt:

$$b_{x1x2} = \frac{B_{x1}}{B_{x2}} = \frac{z_{x2}{}^2}{z_{x1}{}^2} = \frac{(r-x)^2}{(r+x)^2} , \qquad (3)$$

wobei $b_{x1x2}$ das Verhältnis der Magnetfeldamplituden $B_{x1}$ zu der Magnetfeldamplitude $B_{x2}$ ist. $z_{x1}$ ist der Abstand des Sensors $S_{x1}$(63) zur Störung 60. $z_{x2}$ ist der Abstand des Sensors $S_{x2}$(65) zur Störung 60.

Nach Formel 1 ist das gemessene Magnetfeld der Sensoren 63, 65 umgekehrt proportional zum Quadrat des Abstandes der Sensoren 63, 65 zur Störung 60. Bei bekanntem Amplitudenverhältnis $b_{x1x1}$ lässt sich aus Formel 3 die Koordinate x(103) berechnen. Nach Umstellung der Formel 3 ergibt sich eine quadratische Gleichung die zwei Lösungen $x_{1/2}$ aufweist:

$$x_{1/2} = \lambda R \pm \sqrt{(\lambda R)^2 - R^2} , \qquad (4)$$

wobei $\lambda = \left( \dfrac{1 + b_{x1x2}}{1 - b_{x1x2}} \right)$ und $b_{x1x2} = B_{x1}/B_{x2}$ ist.

Eine der beiden Lösungen $x_{1/2}$ liegt außerhalb des zu untersuchenden Drahtes 1. Damit ist gemäß Formel 4 die Koordinate x(103) über ein gemessenes Amplitudenverhältnis eindeutig bestimmt. In gleicher Weise wie für die Sensoren 63, 65 lässt sich für die Sensoren 62, 64 ein Amplitudenverhältnis bestimmen. Aus diesem lässt sich die Koordinate y(104) der Störung 60 berechnen. Die Koordinaten x(103) und y(104) bilden den Schnittpunkt 90 der über eine FEM-Simulation berechneten Amplitudenmap, die in Figur 33 gezeigt ist.

Die Berechnung der Position einer Störung 60 in der Querschnittsebene eines Drahtes 1 nach Formel 4 ist möglich, wenn von jedem der vier Sensoren 62 bis 65 ein Signal der Störung 60 gemessen wird. Man erhält zwei Amplitudenverhältnisse der jeweils gegenüberliegenden Sensoren und bestimmt mittels der FEM-simulierten Amplitudenmaps Linien 88, 89. Der Schnittpunkt 90 der Linien 88, 89 entspricht der Position der Störung 60.

Dieser Rückrechenalgorithmus kann angepasst werden, wenn einer oder mehrere der vier Sensoren 62 bis 65 kein Defektsignal registriert. Der oder die Magnetfeldsensoren ohne Defektsignal geben ein Signal in Form von Sensorrauschen an den Lockin-Verstärker 14 ab. Das Defektsignal wird von dem Sensorrauschen überlagert. Das zu messende Defektsignal des rauschenden Magnetfeldsensors ist kleiner oder gleich dem Signal, das als Rauschen gemessen wird. Beispielsweise misst der Sensor $S_{x1}$ eine Magnetfeldamplitude von 100 $\mu$T. Der Sensor $S_{x2}$ misst lediglich Rauschen mit einem Wert von beispielsweise 30 nT. Das Amplitudenverhältnis beider Sensoren beträgt:

$$b_{x1x2} \geq \frac{B_{x1}}{B_{x2}} = \frac{100\mu T}{30nT} \Rightarrow B_{x1x2} \geq 3300 \, . \qquad (5)$$

Aus einer geschwungenen Amplitudenlinie bzw. einem Amplitudenband 88, 89 wird eine Fläche 105, die in Figur 39 schematisch dargestellt ist. Der Sensor 64 misst ein Rauschsignal, in dem das Signal der Störung untergeht. Die Fläche 105 zeigt den Bereich im Querschnitt des Drahtes 1 an, in dem sich die Störung in y-Richtung bei Amplitudenverhältnisbildung der Sensoren 62, 64 befinden muss. Die Fläche in der Querschnittsebene des Drahtes 1 außerhalb der Fläche 105 zeigt den Bereich eines Defektes an, in dem der Defekt ein Messsignal am Magnetfeldsensor 64 von größer gleich 30 nT erzeugt hätte. Der Defekt kann daher nicht außerhalb der Fläche 105 im Draht 1 liegen. Die Sensoren 62, 64 sind lediglich in Richtung der y-Achse empfindlich. Daher wird die Fläche 105 durch eine Gerade 106 begrenzt, die senkrecht zu der Verbindungslinie der Sensoren 62, 64 angeordnet ist. Die Fläche 105 im Querschnitt des Drahtes 1 wird begrenzt durch die Linie 106, die durch das Amplitudenverhältnis 3300 festgelegt ist.

Neben dem Sensor 63 registrieren die Sensoren 62 und 64 ein Messsignal der zu detektierenden Störung. Aus dem Amplitudenverhältnis der Magnetfelder der Sensoren 62, 64 ergibt sich wiederum eine Linie 88, die der Fläche 105 überlagert werden kann. Die Position der zu detektierenden Störung liegt in demjenigen Bereich der Linie 88, der sich innerhalb der Fläche 105 befindet. Sollte einer der beiden Sensoren 63, 65 zusätzlich zum Sensor 64 lediglich schwaches Rauschen messen, ergeben sich zwei Flächen, in denen der Defekt jeweils liegen muss. Dieser Bereich ist die Schnittfläche, die durch eine Überlagerung der beiden Flächen gebildet wird.

Ein Amplitudenverhältnis lässt sich auch von auf dem Umfang des Drahtes 1 benachbarten Sensoren bilden. Bei der in Figur 39 gezeigten Anordnung der sensoren 62 bis 65 wird im Rückrechenalgorithmus lediglich das von den benachbarten Sensoren eingeschlossene Viertel der Querschnittsfläche des Drahtes 1 für die Bestimmung der Defektpositionen herangezogen. Bei mehr als vier Sensoren werden lediglich Amplitudenverhältnisse der abgenommenen Magnetfelder von benachbarten Magnetfeldsensoren herangezogen, die Querschnittskoordinaten in einem Segment des Drahtquerschnittes aufweisen. Das Segment im Drahtquerschnitt weist zwei Geraden und eine Linie auf dem Umfang des Drahtes auf. Die Linie verbindet die benachbarten Sensoren auf dem kürzesten Weg. Die Geraden des Segmentes verlaufen jeweils durch den Drahtmittelpunkt und die Position der beiden benachbarten Sensoren. Die Informationen zur Positionsbestimmung von Amplitudenverhältnissen benachbarter Sensoren können mit der Information von sich gegenüberliegenden Sensoren kombiniert werden. Es hat sich gezeigt, dass Schnittpunkte zwischen Linien aus Amplitudenverhältnissen abgenommener Magnetfelder von sich gegenüberliegenden Magnetfeldsensoren und von Amplitudenverhältnissen abgenommener Magnetfelder von benachbarten Sensoren zur Positionsbestimmung einer Störung nicht herangezogen werden sollten.

Bei der in Figur 38 gezeigten Anordnung der Sensoren 62 bis 65 und einem ausreichenden Signal an allen Sensoren für die zu untersuchende Störung ergeben sich zwei Linien aus den Amplitudenverhältnissen sich hinsichtlich der Längsachse des Drahtes 1 gegenüberliegender Sensoren mit einem Schnittpunkt. Zusätzlich können vier Linien aus den Amplitudenverhältnissen jeweils von auf dem Umfang des Drahtes 1 benachbarten Sensoren zur Positionsbestimmung der Störung herangezogen werden, die vier Schnittpunkte bilden. Insgesamt erhält man mit der in Figur 39 gezeigten Anordnung der Sensoren fünf Schnittpunkte. Die messtechnisch bestimmte Position einer Störung ist daher mit vier Sensoren, die jeweils ein von einer Störung erzeugtes Signal detektieren, überbestimmt. Zur Bestimmung der Position der Störung wird eine Mittelung zwischen den bestimmten Schnittpunkten vorgenommen.

Die Messung eines Defektes mit der in Figur 5 gezeigten Prüfanordnung führt zu einer Änderung des Widerstandes in den Widerstandsstreifen 22, 23 eines jeden verwendeten Magnetfeldsensors. Diese Widerstandsänderung im Magnetfeldsensor hat einen Spannungshub zur Folge. Der Spannungshub wird mit dem Lockin-Verstärkers 14 detektiert. Mit Hilfe der Kennlinie der Magnetfeldsensoren kann dieser Spannungshub einem magnetischen Feld zugeordnet werden. Das von dem zu untersuchenden Defekt verursachte Magnetfeld lässt sich auf diese Weise bestimmen. Für das Magnetfeld B gilt:

$$B = \frac{\mu_0 j_0}{1.354}\left(\frac{\beta-1}{\beta+2}\right)\frac{r^3}{z^2} \qquad\qquad (6)$$

mit $\mu_0 = 4\pi \cdot 10^{-7}$ N/A$^2$ und $j_0$ ist die Wirbelstromdichte an der Position der Störung im Draht, $\beta = \sigma_{Def}/\sigma_{Mat}$ ist als Verhältnis aus Leitfähigkeit Störung $\sigma_{Def}$ zu der Leitfähigkeit $\sigma_{Mat}$ des Drahtes ohne Störung, z ist der Abstand des Mittelpunktes der Störung zu einem Magnetfeldsensor, und r ist der Radius der Störung.

Die Wirbelstromdichte $j_0$ an der Position der Störung im Draht wird mittels einer FEM-Simulation berechnet. Über Formel 1 lässt sich die Position der zu untersuchenden Störung im Draht in der Querschnittsebene des Drahtes bestimmen. Alternativ lässt sich die Position der zu untersuchenden Störung durch die Überlagerung von Phasenbändern bestimmen, wie in Zusammenhang mit Figur 32 gezeigt. Das Verhältnis der Leitfähigkeit der Störung $\sigma_{Def}$ zu der Leitfähigkeit des Drahtes ohne Störung $\sigma_{Mat}$ lässt sich experimentell bestimmen. Bei bekannter Position der Störung im Draht lässt sich der Abstand des Mittelpunktes der Störung zu jedem vorhandenen Magnetfeldsensor aus den Querschnittskoordinaten der Störung im Draht berechnen.

Der Radius der Störung wird im Rückrechenalgorithmus derart verändert, dass der berechnete Absolutwert des Magnetfeldes jedem der abgenommenen Absolutwerte der Magnetfelder der vorhandenen Magnetfeldsensoren entspricht. Die aus den Absolutwerten der abgenommenen Magnetfelder jedes Magnetfeldsensors berechneten Durchmesser der Störung können voneinander abweichen. In diesem Fall wird die Position der Störung in einer iterativen Abfolge verändert. Die Iteration ist beendet, wenn die aus den Absolutwerten jedes Magnetfeldsensors berechneten Durchmesser übereinstimmen oder die Durchmesser wenig voneinander abweichen. Werte von Amplituden können als Absolutwerte der abgenommenen Magnetfelder verwendet werden.

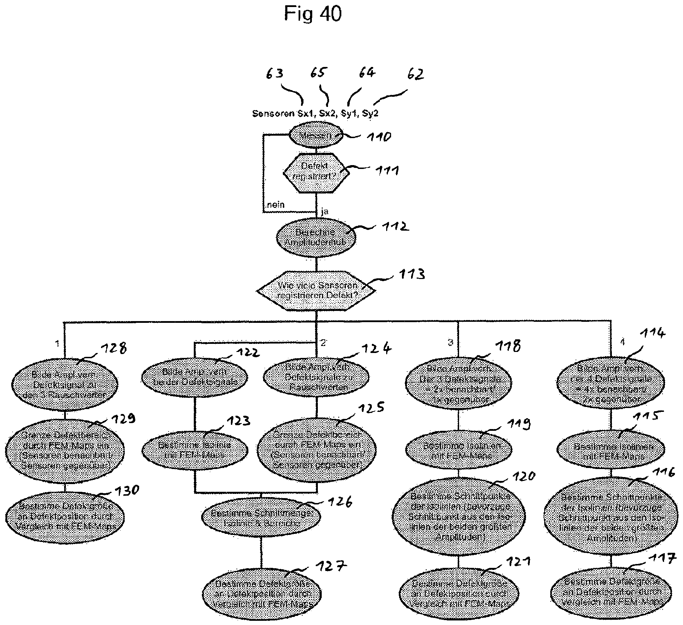

Ein Flussdiagramm, das den Ablauf bei der Bestimmung der Defektposition und Defektgröße bei fehlender Magnetfeldsensorinformation zeigt, ist Figur 40 zu entnehmen. Ausgehend von der in Figur 39 gezeigten Anordnung der Sensoren werden Signale von den Sensoren 62 bis 65 abgenommen (110). Solange keine Messsignale vorliegen, wird kein Defekt registriert (111). Die Daten der Sensoren 62 bis 65 werden in der Auswerteeinheit 19 nicht gespeichert. Bei Registrierung eines Defektes wird für jeden Magnetfeldsensor der Signalhub 68 der Amplitude des Magnetfeldsensors berechnet (112). Es folgt eine Feststellung der Anzahl an Sensoren, die einen Defekt registrieren (113). Bei Vorlage von Messsignalen aller vier Sensoren werden die Amplitudenverhältnisse jeweils von sich gegenüberliegenden Sensoren und benachbarten Sensoren gebildet (114). Es ergeben sich vier Amplitudenverhältnisse benachbarte Sensoren. Zusätzlich ergeben sich zwei Amplitudenverhältnisse von gegenüberliegenden Sensoren. Mittels FEM-Simulätion werden anhand der vorliegenden Amplitudenverhältnisse Linien 88, 89 in der Querschnittsebene des zu untersuchenden Körpers gebildet (115). Nun werden die Schnittpunkte der Linien von sich gegenüberliegenden Sensoren und die Schnittpunkte der Linien von benachbarten Sensoren gebildet. Bevorzugt wird der Schnittpunkt aus den Linien gebildet, die von dem Amplitudenverhältnissen der beiden größten gemessenen Amplituden gebildet werden (116). Bei Vorlage der Defektposition kann mittels FEM-Simulation der Abstand des Defektes zu jedem Magnetfeldsensor bestimmt werden. Die Defektgröße wird mit Hilfe der Formel 6 in der Auswerteeinheit 19 berechnet (117).

Bei Vorlage von drei einen Defekt registrierenden Sensoren werden die Amplitudenverhältnisse der Signale von drei Magnetfeldsensoren gebildet (118). Es ergeben sich zwei Amplitudenverhältnisse benachbarter Sensoren und ein Amplitudenverhältnis von sich gegenüberliegenden Sensoren. Zusätzlich ergeben sich Amplitudenverhältnisse aus den Ungleichungen mit den Magnetfeldsensoren, die lediglich schwaches Rauschen messen. Aus den beiden Linien der Amplitudenverhältnisse benachbarter Sensoren ergibt sich ein Schnittpunkt. Die Linie aus den Amplitudenverhältnissen von sich gegenüberliegenden Sensoren kann zusätzlich zur Bestimmung der Position herangezogen werden. Außerdem liegen Flächen vor, die aus den Amplitudenverhältnissen mit Sensoren gebildet werden, die lediglich schwaches Rauschen messen. Der Defekt liegt innerhalb der Schnittfläche der mittels Ungleichungen berechneten Flächen. Damit ist für drei einen Defekt detektierenden Sensoren das Positionsproblem hinreichend bestimmt (120). Bevorzugt wird der Schnittpunkt aus den Linien bestimmt, die von Amplitudenverhältnissen mit den größten gemessenen Amplituden bestimmt sind. Nach der Bestimmung der Position des Defektes kann die Defektgröße nach Formel 5 berechnet werden (121).

Bei zwei einen Defekt registrierenden Sensoren werden lediglich die Amplitudenverhältnisse von benachbarten Sensoren berücksichtigt. Wenn die Amplituden von sich gegenüberliegenden Sensoren stammen würden, müssten auch die benachbarten Sensoren den zu detektierenden Defekt feststellen. Damit ist festgelegt, dass der Defekt in dem von den benachbarten Sensoren eingeschlossenem Quadranten der Querschnittsfläche des Drahtes liegt. Das Amplitudenverhältnis der beiden einen Defekt registrierenden Sensoren wird dann gebildet (122). Mit diesem Amplitudenverhältnis wird eine Linie mittels einer FEM-Simulation auf der Querschnittsfläche des Drahtes ermittelt (123). Daneben werden die Amplitudenverhältnisse gebildet, die jeweils ein Defektsignal und ein Rauschsignal im Nenner enthalten (124). Aus den Ungleichungen zu den Amplitudenverhältnissen von sich gegenüberliegenden Sensoren ergeben sich Flächen 105 zur Eingrenzung der Position des Defektes. Daneben ergeben sich aus den Ungleichungen der Amplitudenverhältnisse mit benachbarten Sensoren Flächen, die eine Eingrenzung der Position der Störung erlauben (125). Die Linie aus dem Amplitudenverhältnis der einen Defekt registrierenden Sensoren wird den Flächen aus Amplitudenverhältnissen mit lediglich ein Rauschsignal erzeugenden Magnetfeldsensoren überlagert. Eine Defektpositionsbestimmung ist in den meisten Fällen auch dann möglich, wenn das Positionsproblem mathematisch unterbestimmt ist (126). Mit der Position des Defektes wird die Defektgröße mittels der Formel 6 bestimmt (127). Der Defekt hat bei lediglich zwei einen Defekt registrierenden Sensoren eine kleine Ausdehnung, da bei einer großen Ausdehnung des Defektes alle vier Sensoren ein den Defekt registrierendes Signal an den Lockin-Verstärker 14 abgeben müssten.

Bei lediglich einem, einen Defekt registrierenden Sensor werden die Amplitudenverhältnisse aus Amplituden gebildet, die diesen Sensor einschließen. Es ergeben sich drei Amplitudenverhältnisse (128). Aus den drei Amplitudenverhältnissen ergeben sich drei Flächen innerhalb der Querschnittsfläche des Drahtes. Durch Überlagerung von Flächen benachbarter Sensoren ergibt sich eine Schnittfläche. Diese Schnittfläche kann der Fläche aus der Ungleichung der Amplitudenverhältnisse der abgenommenen Magnetfelder von dem Drahtmittelpunkt gegenüberliegenden Magnetfeldsensoren überlagert werden. Auf diese Weise kann die Position des Defektes eingegrenzt werden (129).

Der Abstand der zu detektierenden Störung zu dem einen Defekt registrierenden Sensor ist deutlich geringer als zu den drei anderen Sensoren. Eine maximale Größe der Störung im Draht kann zusätzlich über einen Absolutabgleich der gemessenen Amplitudenverhältnisse mit Amplitudenverhältnissen erreicht werden, die in einer FEM-Simulation als Funktion der Querschnittskoordinaten ermittelt werden. Als gemessene Amplitudenverhältnisse werden diejenigen Amplitudenverhältnisse herangezogen, die im Nenner abgenommene Magnetfeldamplituden von Magnetfeldsensoren beinhalten, die lediglich ein schwaches Rauschsignal erzeugen. Aus der Ungleichung des Verhältnisses von Amplituden von sich gegenüberliegenden Sensoren kann der Abstand des Defektes zum einen Defekt registrierenden Sensor abgeschätzt werden (129). Dieser Abstand kann zur Bestimmung der Defektgröße mittles Formel 6 verwendet werden (130). Bis zu einem SNR-Verhältnis von 20 kann für die Magnetfeldamplituden der Magnetfeldsensoren mit lediglich schwachem Rauschen die Größe der Störung im Draht bestimmt werden.

Bei lediglich einem einen Defekt detektierendem Sensor liegt der Defekt in einem bestimmten Bereich innerhalb des Drahtes. Dieser Bereich beschreibt einen Kreisring mit einem minimalen inneren Radius. Dieser Radius entspricht einer minimalen Entfernung zum Mittelpunkt der Drahtquerschnittsebene, in der sich die Störung befindet. Die äußere Begrenzung des Kreisringes wird durch den Drahtradius gebildet. Mit dem minimalen inneren Radius lässt sich eine maximale Defektgröße angeben. Der Defekt muss jedoch nicht auf dem minimalen inneren Radius liegen. Liegt er weiter außen, so muss der Defektradius kleiner sein. Würde der Defektradius größer, müsste der einen Defekt messenden Sensor ein größeres Signal registrieren. Die Betrachtungen zu lediglich einem einen Defekt registrierenden Sensor lassen sich auf zwei einen Defekt registrierenden Sensoren übertragen. Vorteilhaft ist im Fall zweier einen Defekt registrierenden Sensoren, dass die Position des Defektes in der Querschnittsebene des Drahtes in x-Richtung und y-Richtung eingegrenzt werden kann. Bei der Bildung von Amplitudenverhältnissen mit Amplituden von Sensoren mit lediglich schwachem Rauschen befinden sich die Amplituden dieser Magnetfeldsensoren vorteilhaft im Nenner.

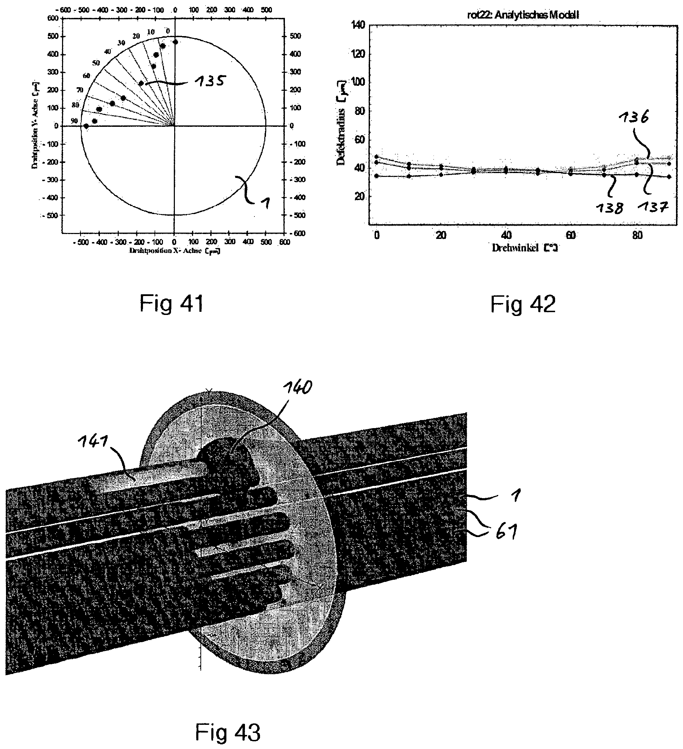

Ein Draht 1 wird nach der Vermessung mit vier GMR-Sensoren zerstörend geprüft und die Position und Größe des Defektes 60 bestimmt. Der Draht 1 wird in 10°-Schritten um die Drahtachse gedreht und jeweils nach jeder Drehung von vier GMR-Sensoren vermessen. Danach wird die Defektposition bestimmt. Figur 41 zeigt die in den jeweiligen Winkellagen der Störung von den GMR-Sensoren gemessene Defektposition für unterschiedliche Winkellagen. Die mittels der Positionen, die in Figur 41 dargestellt sind, berechneten Defektradien sind in Figur 42 dargestellt. Der Defekt 60 wird unabhängig von der Winkellage der Sensoren zu dem Defekt im richtigen Quadranten des Drahtquerschnitts angezeigt. Die Defektposition ist abhängig von der Winkellage der Sensoren zum Defekt. Der geringste Abstand des Defektes vom Drahtmittelpunkt wird bei einer Winkellage von ca. 40° (13) erreicht. Der Defektradius beträgt mit großer Übereinstimmung über alle vier Sensoren ungefähr 40 $\mu$m. Bei gegebener Winkellage des Defektes gegenüber den vier Sensoren und Mittelung der Defektradien 136, 137, 138 über alle Magnetfeldsensoren ist der Defektradius nahezu unabhängig von der Winkellage des Defektes zur Messanordnung.

Figur 43 zeigt schematisch eine Stromverteilung in einem Draht 1 mit einer Filamentstruktur 61. Der Draht 1 weißt einen "dicken Kern" 140 und einen Abriss 141 auf. Die Abrisszone des Abrisses 141 hat eine Länge von 400 $\mu$m. Der Durchmesser des "dicken Kerns" ist dreimal so groß wie der Durchmesser eines Filamentes der Filamentstruktur 61.

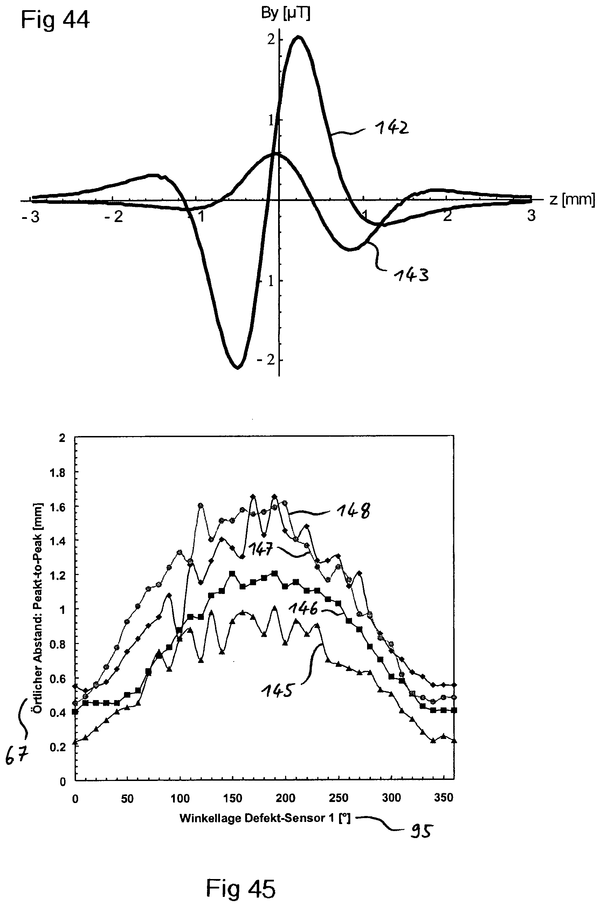

Figur 44 zeigt grafisch die Feldverteilung eines Signals des Abrisses 141 und eines Signals des "dicken Kerns" 140 des supraleitenden Drahtes 1. Das Signal 142 des "dicken Kerns" 140 zeigt gegenüber dem Signal 143 des Abrisses 141 eine Umkehrung der gemessenen Feldamplituden. Über den Verlauf der Messsignale lässt sich daher eine Unterscheidung zwischen einem Abriss und einen "dicken Kern" in der Filamentstruktur 61 eines supraleitenden Drahtes 1 vornehmen.

Die in den Figuren 21 bis 23 gezeigten Verläufe der Signale der Sensoren 62 bis 65 weisen eine Abhängigkeit der Signallänge 67 vom Winkel zwischen der Störung und dem messenden Sensor in der Querschnittsebene des Drahtes 1 auf. Die Signallänge nimmt mit zunehmendem Winkel zwischen der Störung 60 und dem Sensor in der Querschnittsebene des Drahtes 1 zu. Figur 45 stellt die Signallänge 145 bis 148 für vier unterschiedliche Drähte als Funktion der Winkellage des Defektes dar. Man erkennt eine maximale Signallänge 67 für eine Winkellage des zu untersuchenden Defektes zum Magnetfeldsensor von 180° unabhängig vom verwendeten Draht. Defekte mit kurzen Abmessungen in Richtung des Drahtes 1 besitzen kleinere Signallängen als Defekte mit langen Abmessungen in Richtung der Drahtachse. Defekt mit kleinen Abmessungen senkrecht zur Drahtrichtung weisen einen schnelleren Anstieg der Signalbreite bei höherer Winkellage auf als Defekte mit größeren Abmessungen senkrecht zur Drahtrichtung.

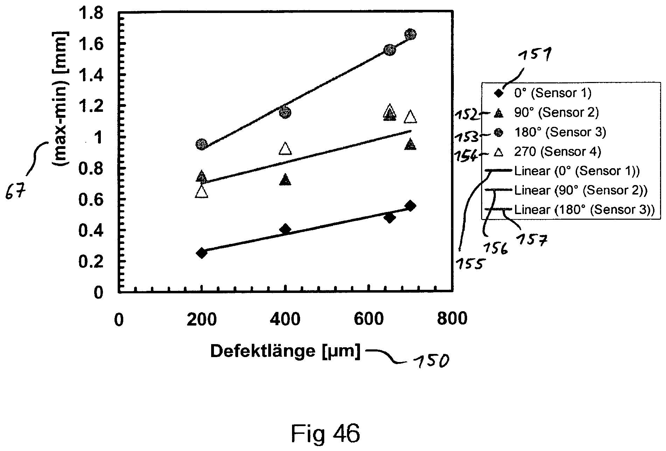

In Figur 46 ist die Signallänge 67 der Defektsignale von vier um den Draht 1 ringförmig angeordneten Sensoren 62 bis 65 als Funktion der Defektlänge grafisch dargestellt. Der Ein Defekt 60 läuft, wie in Figur 20 gezeigt, unmittelbar unterhalb des Sensors 62 an diesem vorbei. Die Signalbreite 151 des Sensors 62 ist deutlich geringer als die Signalbreite 152, 154 der Sensoren 63, 65. Die größte Signalbreite 153 weist das Signal des Sensors 64 auf. Die Lage der Sensoren 62 bis 65 führt zu vier Winkellagen der Sensoren gegenüber dem zu untersuchenden Defekt. Zu einem Defekt liegen daher Messdaten zu vier unterschiedlichen Winkellagen vor. Wie in Figur 46 gezeigt, nimmt die Defektlänge 150 linear mit der Signalbreite 67 zu.

Für jeden Magnetfeldsensor 62 bis 65 kann die Signallänge 67 als Abstand zwischen einem Minimum und Maximum des Signals eines Defektes im Draht bestimmt werden. Die Position der Störung im Draht 1 kann mittels Amplitudenverhältnissen und/oder Phaseninformationen des Defektsignals bestimmt werden. Über die Position der Störung lässt sich der Winkel jedes Magnetfeldsensors zu der Störung bestimmen. Die Länge einer Störung 150 im Draht 1 in Richtung des Drahtes kann abhängig von der Signallänge 67 eines Sensors bestimmt werden. Die Signallänge ist abhängig von dem Winkel zwischen dem Sensor und der Position der Störung.

Ein Beispiel der linearen Abhängigkeit der Defektlänge 150 von der Signalbreite 67 ist in Figur 46 dargestellt. Für jeden Magnetfeldsensor lässt sich aus der Signallänge 67 bei einem berechneten Winkel zwischen dem Magnetfeldsensor und der Position der Störung im Draht 1 jeweils eine Defektlänge 150 bestimmen. Bei vier Magnetfeldsensoren liegen vier Defektlängen 150 zu einer zu untersuchenden Störung vor. Die Defektlängen 150 zu einer Störung können gemittelt werden. Die Defektlänge 150 kann durch Mittelung über vier Defektlängen mit einer Genauigkeit von etwa +/- 15 % bestimmt werden.

**Patentansprüche**

1.   Anordnung eingerichtet zur Prüfung eines Drahtes (1) oder einer Schweiss- oder Bondverbindung in dem Draht (1) auf Störungen (60) mit einer Einrichtung zur Erzeugung eines Wirbelstroms in dem Draht (1) oder der Schweiss- oder Bondverbindung, umfassend:

   - mindestens zwei Magnetfeldsensoren (7, 62, 63, 64, 65) umfassend magnetoresistive Sensorelemente zum Abnehmen des Magnetfeldes an dem Draht (1) oder der Schweiss- oder Bondverbindung, wobei die mindestens zwei Magnetfeldsensoren (7, 62, 63, 64, 65) sich hinsichtlich eines Querschnittsmittelpunktes des Drahtes (1) einander gegenüber liegen, und wobei die mindestens zwei Magnetfeldsensoren in ihren Ausmaßen gleich oder kleiner als die zu untersuchenden Störungen sind, und
   - eine Auswerteinheit (19), die dazu ausgebildet ist, Amplituden- und Phaseninformation und/oder Real- und Imaginärteile des durch die Magnetfeldsensoren (7, 62, 63, 64, 65) an dem Draht (1) oder der Schweiss- oder Bondverbindung abnehmbaren Magnetfeldes zu verarbeiten und Verhältnisse von Amplituden gemessener Magnetfelder auszuwerten.

2.   Anordnung nach Anspruch 1, bei der ein Array (6) aus mindestens vier Magnetfeldsensoren (7, 62, 63, 64, 65) ringartig um den Draht (1) angeordnet ist, wobei der Ring eine Ebene bildet, die senkrecht zur Längsachse des Drahtes (1) verläuft, und jeder Magnetfeldsensor (7, 62, 63, 64, 65) zu benachbarten Magnetfeldsensoren (7, 62, 63, 64, 65) gleiche Abstände aufweist.

3.   Anordnung nach Anspruch 1, bei der die Magnetfeldsensoren (7, 62, 63, 64, 65) als Anisotropic-Magneto-Resistance-(AMR)-Sensoren (7, 62, 63, 64, 65) oder als AMR- Sensor-Array (6) mit einer Vielzahl von Einzelsensoren (7, 62, 63, 64, 65) oder als Giant-Magneto-Resistance-(GMR)-Sensor (7, 62, 63, 64, 65) oder als eine Vielzahl von GMR-Sensoren (7, 62, 63, 64, 65) ausgebildet sind.

4.   Anordnung nach Anspruch 1, weiterhin umfassend zumindest eine gradiometrische Anregungsspule (4, 5).

5. Anordnung nach Anspruch 1, bei der jeweils zwei sich bezüglich des Mittelpunktes des Drahts (1) gegenüberliegende Magnetfeldsensoren (7, 62, 63, 64, 65) in der Richtung der Achse des Drahts gegeneinander versetzt sind.

6. Anordnung nach Anspruch 1, bei der die Bestimmung der Position der Magnetfeldsensoren um den Draht (1) mittels mindestens eines Manipulators erfolgt.

7. Anordnung nach Anspruch 1, bei der die Magnetfeldsensoren gegenüber dem abzunehmenden Magnetfeld jeweils lediglich in einer Richtung empfindlich sind.

8. Verfahren zur Prüfung eines Drahts (1) oder einer Schweiss- oder Bondverbindung in dem Draht (1) auf Störungen (60), bei dem ein Strom in dem Draht (1) oder der Schweiss- oder Bondverbindung erzeugt wird und das Magnetfeld an dem Draht (1) oder der Schweiss- oder Bondverbindung mittels mindestens zwei Magnetfeldsensoren (7, 62, 63, 64, 65) umfassend magnetoresistive Sensorelemente abgenommen wird, wobei die mindestens zwei Magnetfeldsensoren (7, 62, 63, 64, 65) sich hinsichtlich eines Querschnittsmittelpunktes des Drahtes einander gegenüber liegen und die mindestens zwei Magnetfeldsensoren in ihren Ausmaßen gleich oder kleiner als die zu untersuchenden Störungen sind, und eine Amplituden- und Phaseninformation und/oder Real- und Imaginärteile des mit den mindestens zwei Magnetfeldsensoren (7, 62, 63, 64, 65) an dem Draht (1) oder der Schweiss- oder Bondverbindung abgenommenen Magnetfeldes mit einer Auswerteeinheit (19) verarbeitet und Verhältnisse von Amplituden gemessener Magnetfelder mit der Auswerteeinheit (19) ausgewertet werden.

9. Verfahren nach Anspruch 8, bei dem aufgrund der unterschiedlichen Positionierung mehrerer Magnetfeldsensoren zu dem Draht die von den Magnetfeldsensoren (7, 62, 63, 64, 65) gemessenen Phasenlagen der Magnetfelder als unterschiedliche Linien in einer begrenzten Fläche des Querschnittes des Drahtes (1) ermittelt wird, der dem Ort der Störung (60) im Draht (1) entspricht.

10. Verfahren nach Anspruch 8, bei dem Phasenlage, Amplitude, Signallänge sowie eine Anzahl von Spitzenwerten aus den Daten zu den abgenommenen Magnetfeldern als Charakteristika einer Störung (60) im Draht (1) angezeigt werden.

11. Verfahren nach Anspruch 10, bei dem die Anzahl an Störungen (60) im Draht (1) über die Anzahl an Spitzenwerten im abgenommenen Magnetfeld ermittelt wird, der Abstand der Störung (60) von der Oberfläche des Drahts (1) aus der Phasenlage des abgenommenen Magnetfeldes und die Abmessung der Störung (60) aus der Amplitude des abgenommenen Magnetfeldes berechnet wird.

12. Verfahren nach Anspruch 8, bei dem eine Verarbeitung des abgenommenen Magnetfeldes folgende Schritte aufweist:

- Kompensation der Bewegung des Draht (1) senkrecht zur Längsachse des Drahts (1), wobei durch Subtraktion einer linearen Funktion von den Daten zu den abgenommenen Magnetfeldern die Daten auf Null gesetzt werden, und
- Einstellen einer Phasenlage im abgenommenen Magnetfeld über eine Phasenrotation, bis das abgenommene Magnetfeld der Störung (60) in einem Kanal (15, 16, 17, 18) eine möglichst grosse Amplitude gegenüber einem Kompensationssignal (13) aufweist, wobei Amplituden und Phasendaten genutzt werden, die in einem Lockin-Verstärker (14) aufgezeichnet werden, und
- Kompensation der Mitbewegung des Drahts (1) axial zur Längsachse des Drahts (1) mittels Quadrierung des abgenommenen Magnetfeldes oder einer aus dem abgenommenen Magnetfeld abgebildeten Grösse.

13. Verfahren nach Anspruch 8, bei dem die Position einer Störung (60) im Draht (1) anhand der Phasendaten des abgenommenen Magnetfeldes bestimmt werden, wobei für das abgenommene Magnetfeld von einem einzelnen Magnetfeldsensor (7, 62, 63, 64, 65) sich die Position der Störung (60) an jeder Stelle eines Phasenbandes (82, 84, 86) befinden kann, das aus den Positionen gleicher Phase in der Querschnittsebene des Drahts (1) gebildet wird, in der der einzelne Magnetfeldsensor (7, 62, 63, 64, 65) angeordnet ist, und

- für das abgenommene Magnetfeld von jedem weiteren Magnetfeldsensor (7, 62, 63, 64, 65) ein weiteres Phasenband (82, 84, 86) in der Querschnittsebene des Drahts (1) gebildet und den Phasenbändern (82, 84, 86) der abgenommenen Magnetfelder der anderen Magnetfeldsensoren (7, 62, 63, 64, 65) überlagert wird, wobei die Ausrichtung der Phasenlage des abgenommenen Magnetfeldes jedes Magnetfeldsensors (7, 62, 63, 64, 65) zum Draht (1) und zu den anderen Magnetfeldsensoren (7, 62, 63, 64, 65) gemäss der Positionierung der Magnetfeldsensoren (7, 62, 63, 64, 65) zum Draht (1) und zu den anderen Magnetfeldsensoren (7, 62, 63, 64, 65) durchgeführt wird, und

- durch Überlagerung der Phasenlagen der abgenommenen Magnetfelder unterschiedlicher Magnetfeldsensoren (7, 62, 63, 64, 65) ein Schnittpunkt (90) gebildet wird, der der Position der Störung (60) in der Querschnittsebene des Drahts (1) entspricht.

14. Verfahren nach Anspruch 8, bei dem zur Bestimmung der Position und Grösse von Störungen (60) in einem Draht (1) die Verhältnisse von Amplituden ausgewertet werden, die aus Amplituden der abgenommenen Magnetfelder von Magnetfeldsensoren (7, 62, 63, 64, 65) gebildet werden, die sich hinsichtlich der Drahtlängsachse gegenüberliegen und die benachbart sind, wobei

ein Array aus mindestens vier Magnetfeldsensoren (7, 62, 63, 64, 65) ringförmig um den zu prüfenden Draht (1) positioniert wird, wobei der Ring eine Ebene bildet, die senkrecht zur Längsachse des Drahtes (1) verläuft, und jeder Magnetfeldsensor (7, 62, 63, 64, 65) von benachbarten Magnetfeldsensoren (7, 62, 63, 64, 65) in gleichem Abständen am Umfang des Drahtes (1) angeordnet wird, wobei

- jeder der mindestens vier Magnetfeldsensoren (7, 62, 63, 64, 65) gegenüber dem abzunehmenden Magnetfeld nur in einer Richtung empfindlich ist, wobei die empfindliche Messachse jedes Magnetfeldsensors (7, 62, 63, 64, 65) senkrecht zur Drahtlängsachse steht und jeder Magnetfeldsensor (7, 62, 63, 64, 65) mit seiner empfindlichen Messachse auf die Drahtlängsachse hin ausgerichtet wird, und

- eine Verhältnisbildung der Amplituden der abgenommenen Magnetfelder von sich hinsichtlich der Drahtlängsachse gegenüberliegenden Magnetfeldsensoren (7, 62, 63, 64, 65) erfolgt, wobei als Amplituden der abgenommenen Magnetfelder lediglich die Magnetfeldanteile in Richtung der empfindlichen Messachsen abgenommen werden, und

- ein Amplitudenverhältnis der abgenommenen Magnetfelder von sich hinsichtlich der Drahtlängsachse gegenüberliegenden Magnetfeldsensoren (7, 62, 63, 64, 65) gebildet wird, das einer Linie im Querschnitt des Drahtes (1) entspricht, und die Störung (60) im Draht (1) sich an einer Stelle auf der Linie befindet, und

- durch die Überlagerung von zwei Linien, die Amplitudenverhältnissen von jeweils zwei sich hinsichtlich der Drahtlängsachse gegenüberliegenden Magnetfeldsensoren (7, 62, 63, 64, 65) entsprechen, im Drahtquerschnitt ein Schnittpunkt gebildet wird, der der Position der Störung (60) im Drahtquerschnitt entspricht.

**Claims**

1. An arrangement configured for testing a wire (1) or a welded or bonded joint in the wire (1) for faults (60) by means of a device for generating of an eddy current in the wire (1) or the welded or bonded joint, comprising:

   - at least two magnetic field sensors (7, 62, 63, 64, 65), comprising magneto-resistive sensor elements for sensing the magnetic field on the wire (1) or the welded or bonded joint, wherein the at least two magnetic field sensors (7, 62, 63, 64, 64) are located opposite to one another with respect to a cross-sectional center point of the wire (1), and wherein the at least two magnetic field sensors have a size equal to or smaller than the faults to be investigated, and

   - an evaluation unit (19) which is designed to process amplitude and phase information and/or real and imaginary parts of the magnetic field to be sensed on the wire (1) or the welded or bonded joint by the magnetic field sensors (7, 62, 63, 64, 64) and to evaluate ratios of amplitudes of magnetic fields measured.

2. The arrangement according to claim 1, wherein an array (6) of at least four magnetic field sensors (7, 62, 63, 64, 65) is arranged around the wire (1) in a ring-like manner, wherein the ring forms a plane that extends perpendicular to the longitudinal axis of the wire (1), and each magnetic field sensor (7, 62, 63, 64, 65) has the same distances to adjacent magnetic field sensors (7, 62, 63, 64, 65).

3. The arrangement according to claim 1, wherein the magnetic field sensors (7, 62, 63, 64, 65) are designed as anisotropic magneto-resistance (AMR) sensors (7, 62, 63, 64, 65) or an AMR sensor array (6) having a plurality of individual sensors (7, 62, 63, 64, 65), or as giant magneto-resistance (GMR) sensor (7, 62, 63, 64, 65) or as a plurality of GMR sensors (7, 52, 63, 64, 65).

4. The arrangement according to claim 1, further comprising at least one gradiometric excitation coil (4, 5).

5. The arrangement according to claim 1, wherein in each case two magnetic field sensors (7, 62, 63, 64, 65), which are situated opposite to one another with respect to the center point of the wire (1), are offset with respect to one another in the direction of the axis of the wire.

6. The arrangement according to claim 1, wherein determining the position of the magnetic field sensors around the wire (1) is carried out by means of at least one manipulator.

7. The arrangement according to claim 1, wherein the magnetic field sensors are each sensitive to the magnetic field to be sensed in only one direction.

8. A method for testing a wire (1) or a welded or bonded joint in the wire (1) for faults (60), wherein a current is produced in the wire (1) or the welded or bonded joint and the magnetic field on the wire (1) or the welded or bonded joint is sensed by means of at least two magnetic field sensors (7, 62, 63, 64, 65) comprising magneto-resistive sensor elements, wherein the at least two magnetic field sensors (7, 62, 63, 64, 65) are situated opposite to one another with respect to a cross-sectional center point of the wire, and the at least two magnetic field sensors have a size equal to or smaller than the faults to be investigated, and an amplitude and phase information and/or real and imaginary parts of the magnetic field sensed on the wire (1) or the welded or bonded joint by the at least two magnetic field sensors (7, 62, 63, 64, 65) are processed by means of an evaluation unit (19) and ratios of amplitudes of magnetic fields measured are evaluated by means of the evaluation unit (19).

9. The method according to claim 8, wherein due to different positioning of a plurality of magnetic field sensors relative to the wire, the phase positions measured by the magnetic field sensors (7, 62, 63, 64, 65) are detected as different lines in a limited area of the cross-section of the wire (1), which corresponds to the location of the fault (60) in the wire (1).

10. The method according to claim 8, wherein the phase position, amplitude, signal length and a number of peak values from the data relating to the magnetic fields sensed are indicated as characteristics of a fault (60) in the wire (1).

11. The method according to claim 10, wherein the number of faults (60) in the wire (1) is determined via the number of peak values in the magnetic field sensed, the distance of the fault (60) from the surface of the wire (1) is calculated from the phase position of the magnetic field sensed, and the size of the fault (60) is calculated from the amplitude of the magnetic field sensed.

12. The method according to claim 8, wherein the processing of the sensed magnetic field comprises the following steps:

- compensating for the movement of the wire (1) perpendicular to the longitudinal axis of the wire (1), wherein the data are set to zero by subtracting a linear function from the data relating to the magnetic fields sensed, and
- setting of a phase position in the magnetic field sensed via a phase rotation until the magnetic field sensed of the fault (60) in a channel (15, 16, 17, 18) has an amplitude which is as large as possible with respect to a compensation signal (13), wherein amplitudes and phase data are used which are recorded in a lock-in amplifier (14), and
- compensating for the joint movement of the wire (1) axial with respect to the longitudinal axis of the wire (1) by means of squaring the magnetic field sensed or a variable which is mapped from the magnetic field sensed.

13. The method according to claim 8, wherein the position of a fault (60) in the wire (1) is determined on the basis of the phase data of the magnetic field sensed, wherein for the magnetic field sensed from a single magnetic field sensor (7, 62, 63, 64, 65), the position of the fault (60) can be located at any point of a phase band (82, 84, 86) which is formed from the positions of equal phase in the cross-sectional plane of the wire (1), in which plane the individual magnetic field sensor (7, 62, 63, 64, 65) is arranged, and

- a further phase band (82, 84, 86) is formed in the cross-sectional plane of the wire (1) for the magnetic field sensed by every further magnetic field sensor (7, 62, 63, 64, 65) and is superimposed on the phase bands (82, 84, 86) of the magnetic fields sensed by the other magnetic field sensors (7, 62, 63, 64, 65), wherein the alignment of the phase position of the magnetic field sensed by each magnetic field sensor (7, 62, 63, 64, 65) with respect to the wire (1) and to the other magnetic field sensors (7, 62, 63, 64, 65) is carried out according to the positioning of the magnetic field sensors (7, 62, 63, 64, 65) with respect to the wire (1) and to the other magnetic field sensors (7, 62, 63, 64, 65), and
- an intersection (90) which corresponds to the position of the fault (60) in the cross-sectional plane of the wire (1) is formed by superimposition of the phase positions of the magnetic fields (7, 62, 63, 64, 65) sensed by different magnetic field sensors (7, 62, 63, 64, 65).

14. The method according to claim 8, wherein for determining the position and size of faults (60) in a wire (1), the ratios of amplitudes formed from amplitudes of magnetic fields sensed by magnetic field sensors (7, 62, 63, 64, 65) which are opposite to one another with respect to the wire longitudinal axis and are adjacent are evaluated, wherein an array comprising at least four magnetic field sensors (7, 62, 63, 64, 64) is positioned annularly around the wire (1) to be tested, wherein the ring forms a plane which extends perpendicular to the longitudinal axis of the wire (1), and each magnetic field sensor (7, 62, 63, 64, 65) is arranged at the same distance from adjacent magnetic field sensors (7, 62, 63, 64, 65) on the circumference of the wire (1), wherein

- each of the at least four magnetic field sensors (7, 62, 63, 64, 65) is sensitive to the magnetic field to be sensed in only one direction, wherein the sensitive measurement axis of each magnetic field sensor (7, 62, 63, 64, 65) is perpendicular to the wire longitudinal axis and each magnetic field sensor (7, 62, 63, 64, 65) is aligned with its sensitive measurement axis towards the wire longitudinal axis, and
- forming a ratio of the amplitudes of the magnetic fields sensed by magnetic field sensors (7, 62, 63, 64, 65) which are opposite to one another with respect to the wire longitudinal axis is carried out, wherein only the magnetic field portions in the direction of the sensitive measurement axes are sensed as amplitudes of the magnetic fields sensed, and
- an amplitude ratio of the magnetic fields sensed by magnetic field sensors (7, 62, 63, 64, 65) which are opposite to one another with respect to the wire longitudinal axis is formed, which corresponds to a line in the cross-section of the wire (1), and the fault (60) in the wire (1) is located at a point on said line, and
- an intersection which corresponds to the position of the fault (60) in the wire cross-section is formed in the wire cross section by superimposition of two lines which correspond to amplitude ratios of in each case two magnetic field sensors (7, 62, 63, 64, 65) which are opposite to one another with respect to the wire longitudinal axis.

**Revendications**

1. Dispositif conçu pour contrôler les défauts (60) d'un fil (1) ou d'une liaison soudée ou métallisée dans le fil (1) avec un appareil destiné à produire un courant de Foucault dans le fil (1) ou la liaison soudée ou métallisée, ledit dispositif comprenant :

- au moins deux capteurs de champ magnétique (7, 62, 63, 64, 65) comprenant des éléments de capteur magnétorésistifs destinés à capter le champ magnétique sur le fil (1) ou la liaison soudée ou métallisée, dans lequel lesdits au moins deux capteurs de champ magnétique (7, 62, 63, 64, 65) se font face par rapport au point central transversal du fil (1), et dans lequel lesdits au moins deux capteurs de champ magnétique sont de dimensions identiques ou inférieures aux défauts à contrôler, et
- une unité d'évaluation (19) conçue dans le but de traiter une information relative aux amplitudes et aux phases et/ou des parties réelles et imaginaires du champ magnétique pouvant être capté par les capteurs de champ magnétique (7, 62, 63, 64, 65) sur le fil (1) ou la liaison soudée ou métallisée et d'évaluer des rapports d'amplitudes des champs magnétiques mesurés.

2. Dispositif selon la revendication 1, dans lequel un réseau (6) constitué d'au moins quatre capteurs de champ magnétique (7, 62, 63, 64, 65) en cercle est disposé autour du fil, dans lequel le cercle forme un plan perpendiculaire à l'axe longitudinal du fil (1), et chaque capteur de champ magnétique (7, 62, 63, 64, 65) est situé à équidistance du capteur de champ magnétique voisin (7, 62, 63, 64, 65).

3. Dispositif selon la revendication 1, dans lequel les capteurs de champ magnétique (7, 62, 63, 64, 65) sont configurés sous forme de capteurs de magnétorésistance anisotrope (MRA) (7, 62, 63, 64, 65) ou de réseau de capteurs MRA (6) ayant une multitude de capteurs individuels (7, 62, 63, 64, 65) ou sous forme de capteur de magnétorésistance géante (MRG) (7, 62, 63, 64, 65) ou d'une multitude de capteurs MRG (7, 62, 63, 64, 65).

4. Dispositif selon la revendication 1, comprenant en outre au moins une bobine d'excitation gradiométrique (4, 5).

5. Dispositif selon la revendication 1, dans lequel respectivement deux capteurs de champ magnétique (7, 62, 63, 64, 65) se faisant face par rapport au point central du fil (1) sont décalés l'un par rapport à l'autre dans la direction de l'axe du fil.

**6.** Dispositif selon la revendication 1, dans lequel on effectue la détermination de la position des capteurs de champ magnétique autour du fil (1) à l'aide d'au moins un manipulateur.

**7.** Dispositif selon la revendication 1, dans lequel les capteurs de champ magnétique sont respectivement sensibles vis-à-vis du champ magnétique à capter uniquement dans une direction.

**8.** Procédé pour contrôler les défauts (60) d'un fil (1) ou d'une liaison soudée ou métallisée dans le fil (1), dans lequel on génère un courant dans le fil (1) ou la liaison soudée ou métallisée et le champ magnétique est capté sur le fil (1) ou la liaison soudée ou métallisée à l'aide d'au moins deux capteurs de champ magnétique (7, 62, 63, 64, 65) comprenant des éléments de capteur magnétorésistifs, dans lequel lesdits au moins deux capteurs de champ magnétique (7, 62, 63, 64, 65) se font face par rapport à un point central transversal du fil et lesdits au moins deux capteurs de champ magnétique sont de dimensions identiques ou inférieures aux défauts à contrôler, et on traite avec une unité d'évaluation (19) une information relative aux amplitudes et aux phases et/ou des parties réelles et imaginaires du champ magnétique pouvant être capté par lesdits au moins deux capteurs de champ magnétique (7, 62, 63, 64, 65) sur le fil (1) ou la liaison soudée ou métallisée et on évalue avec l'unité d'évaluation (19) des rapports d'amplitudes des champs magnétiques mesurés.

**9.** Procédé selon la revendication 8, dans lequel, sur la base du positionnement différent de plusieurs capteurs de champ magnétique par rapport au fil, on détermine les positions de phase des champs magnétiques, mesurées par les capteurs de champ magnétique (7, 62, 63, 64, 65), sous la forme de lignes différentes dans une surface délimitée de la transversale du fil (1) correspondant à l'endroit du défaut (60) dans le fil (1).

**10.** Procédé selon la revendication 8, dans lequel on indique la position de phase, l'amplitude, la longueur du signal, et un nombre de valeurs de crête provenant des données relatives aux champs magnétiques captés en tant que caractéristiques d'un défaut (60) dans le fil (1).

**11.** Procédé selon la revendication 10, dans lequel on détermine le nombre de défauts (10) dans le fil (1) par le biais du nombre de valeurs de crête dans le champ magnétique capté, on calcule la distance du défaut (60) par rapport à la surface du fil (1) à partir de la position de phase du champ magnétique capté et la dimension du défaut (60) à partir de l'amplitude du champ magnétique capté.

**12.** Procédé selon la revendication 8, dans lequel un traitement du champ magnétique capté présente les étapes suivantes :

- compensation du mouvement du fil (1) perpendiculairement à l'axe longitudinal du fil (1), dans lequel les données sont mises à zéro par soustraction d'une fonction linéaire des données aux champs magnétiques captés, et
- ajustement d'une position de phase dans le champ magnétique capté à l'aide d'une rotation de phase jusqu'à ce que le champ magnétique du défaut (60) capté dans un canal (15, 16, 17, 18) présente une amplitude maximale par rapport à un signal de compensation (13), dans lequel les amplitudes et données de phase enregistrées dans un amplificateur à verrouillage (14) sont utilisées, et
- compensation du co-mouvement du fil (1) axialement par rapport à l'axe longitudinal du fil (1) à l'aide de la quadrature du champ magnétique capté ou d'une grandeur reproduite à partir du champ magnétique capté.

**13.** Procédé selon la revendication 8, dans lequel on détermine la position d'un défaut (60) dans le fil (1) à l'aide des données de phase du champ magnétique capté, dans lequel la position du défaut (60), pour le champ magnétique capté par un capteur de champ magnétique individuel (7, 62, 63, 64, 65), peut se trouver à tout endroit d'une bande de phase (82, 84, 86) formée à partir des positions de même phase dans le plan transversal du fil (1) dans lequel est disposé le capteur de champ magnétique individuel (7, 62, 63, 64, 65), et

- on forme dans le plan transversal du fil (1) une autre bande de phase (82, 84, 86), pour le champ magnétique capté par tout autre capteur de champ magnétique individuel (7, 62, 63, 64, 65), et on la superpose aux bandes de phase (82, 84, 86) des champs magnétiques captés des autres capteurs de champ magnétique (7, 62, 63, 64, 65), dans lequel l'orientation de la position de phase du champ magnétique capté de chaque capteur de champ magnétique (7, 62, 63, 64, 65) par rapport au fil (1) et aux autres capteurs de champ magnétique (7, 62, 63, 64, 65) est réalisée en fonction du positionnement des capteurs de champ magnétique (7, 62, 63, 64, 65) par rapport au fil (1) et aux autres capteurs de champ magnétique (7, 62, 63, 64, 65), et
- on forme un point d'intersection (90) qui correspond à la position du défaut (60) dans le plan transversal du fil (1) par superposition des positions de phase des champs magnétiques captés des différents capteurs de champ magnétique (7, 62, 63, 64, 65)

14. Procédé selon la revendication 8, dans lequel on évalue les rapports d'amplitudes formés à partir des amplitudes des champs magnétiques captés par les capteurs de champ magnétique (7, 62, 63, 64, 65) qui se font face par rapport à l'axe longitudinal du fil et qui sont voisins dans le but de déterminer la position et la taille des défauts (60) dans un fil (1), dans lequel

on place un réseau constitué d'au moins quatre capteurs de champ magnétique (7, 62, 63, 64, 65) en cercle autour d'un fil (1) à contrôler, dans lequel le cercle forme un plan perpendiculaire à l'axe longitudinal du fil (1) et chaque capteur de champ magnétique (7, 62, 63, 64, 65) est disposé à équidistance des capteurs de champ magnétique voisins (7, 62, 63, 64, 65) sur le pourtour du fil (1), dans lequel

- chacun desdits au moins quatre capteurs de champ magnétique (7, 62, 63, 64, 65) est sensible vis-à-vis du champ magnétique à capter uniquement dans une direction, dans lequel l'axe de mesure sensible de chaque capteur de champ magnétique (7, 62, 63, 64, 65) est perpendiculaire à l'axe longitudinal du fil et chaque capteur de champ magnétique (7, 62, 63, 64, 65) avec son axe de mesure sensible est pointé en direction de l'axe longitudinal du fil, et
- on forme un rapport d'amplitudes des champs magnétiques captés par les capteurs de champ magnétique (7, 62, 63, 64, 65) se faisant face par rapport à l'axe longitudinal du fil, dans lequel les proportions des champs magnétiques en direction des axes de mesure sensibles sont captées uniquement en tant qu'amplitudes des champs magnétiques captés, et
- on forme un rapport d'amplitudes des champs magnétiques captés par les capteurs de champ magnétique (7, 62, 63, 64, 65) se faisant face par rapport à l'axe longitudinal du fil, qui correspond à une ligne dans la transversale du fil (1), et le défaut (60) dans le fil se trouve à un endroit sur la ligne, et
- on forme dans la transversale du fil un point d'intersection correspondant à la position du défaut (60) dans la transversale du fil par la superposition de deux lignes qui correspondent aux rapports d'amplitudes de respectivement deux capteurs de champ magnétique (7, 62, 63, 64, 65) se faisant face par rapport à l'axe longitudinal du fil.

Fig 3

Fig 4

Fig 1

Fig 2

Fig 5

## Fig 6

## Fig 7

## Fig 8

## Fig 9

Fig 10

Fig 11

Fig 12

Fig 13

## Fig 14

## Fig 15

## Fig 16

## Fig 18

## Fig 19

## Fig 17

**Fig 21**

**Fig 20**

**Fig 22**

**Fig 23**

**Fig 24**

Fig 25

Fig 26

Fig 27

Fig 28

Fig 29

Fig 30

Fig 31

Fig 32

Fig 33

**Fig 34**

**Fig 36**

**Fig 35**

**Fig 37**

Fig 38

Fig 39

Fig 40

Fig 41

Fig 42

Fig 43

Fig 44

Fig 45

Fig 46

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. MUCK ; F. GRUHL ; C. WELZEL ; M. VON KREUTZBRUCK.** *Physica C,* 2002, vol. 368, 96-99
- **W. RICKEN ; J. LIU ; W. J. BECKER.** Dresdner Beiträge zur Sensorik. *EMSA 2000,* 2000, vol. 13, 71-72
- **C. H. SMITH ; R. W. SCHNEIDER ; T. DOGARU ; S. T. SMITH.** *Rev. Prog. in QNDE,* 2003, vol. 22, 419-426
- **B. WINCHESKI ; M. NAMKUNG.** *Rev. Prog. Quant. Nondestr. Eval.,* 2000, vol. 509, 465